(19) Europäisches Patentamt
European Patent Office
Office européen des brevets

(11) **EP 4 262 144 B1**

(12) **EUROPEAN PATENT SPECIFICATION**

(45) Date of publication and mention
of the grant of the patent:
**27.05.2026 Bulletin 2026/22**

(21) Application number: **21918919.8**

(22) Date of filing: **12.08.2021**

(51) International Patent Classification (IPC):
***H04L 9/40*** *(2022.01)*

(52) Cooperative Patent Classification (CPC):
**H04L 63/1425; H04L 63/1433; H04L 63/1441**

(86) International application number:
**PCT/CN2021/112269**

(87) International publication number:
**WO 2022/151726 (21.07.2022 Gazette 2022/29)**

(54) **NETWORK THREAT PROCESSING METHOD AND COMMUNICATION APPARATUS**

VERFAHREN ZUR VERARBEITUNG VON NETZWERKBEDROHUNGEN UND
KOMMUNIKATIONSVORRICHTUNG

PROCÉDÉ DE TRAITEMENT DE MENACE DE RÉSEAU ET APPAREIL DE COMMUNICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **12.01.2021 CN 202110038967**

(43) Date of publication of application:
**18.10.2023 Bulletin 2023/42**

(73) Proprietor: **Huawei Technologies Co., Ltd.
Shenzhen, Guangdong 518129 (CN)**

(72) Inventor: **CAI, Yudong
Shenzhen, Guangdong 518129 (CN)**

(74) Representative: **Maiwald GmbH
Engineering
Elisenhof
Elisenstrasse 3
80335 München (DE)**

(56) References cited:
EP-A1- 2 026 527           CN-A- 101 431 416
CN-A- 109 005 173          CN-A- 109 005 173
CN-A- 111 355 610          CN-B- 101 431 416
US-A1- 2020 112 572

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**EP 4 262 144 B1**

## Description

### TECHNICAL FIELD

This application relates to the field of computer network technologies, and in particular, to a network threat processing method and a communication apparatus.

### BACKGROUND

Network attacks and vulnerability of network devices affect network security. In a current technology, network traffic logs and host logs are mainly collected, and the network traffic logs and the host logs are analyzed, to further discover abnormal events caused by abnormal behaviors such as network attacks.

An implementation principle of the current abnormal event detection solution is as follows: A network device (also referred to as a "network element") in a network sends, to an analysis server, network traffic logs generated based on traffic passing through the network element, and a host sends generated host logs to the analysis server. The analysis server performs big data association analysis based on the network traffic logs and the host logs, and performs offline management analysis on a large quantity of logs, to discover abnormal events.

In the foregoing solution, reporting the network traffic logs by the network element and reporting the host logs by the host consume a large quantity of network bandwidth resources. In addition, storing a large quantity of logs by the analysis server also consumes a large quantity of storage resources, and analyzing and processing a large quantity of logs by the analysis server also consumes a large quantity of processing resources. The CN 109 005 173 A refers to an anomaly intrusion detection method for vehicle networking based on traffic flow density difference. The CN 101 431 416 B refers to a synergistic learning invasion detection method used for data gridding.

### SUMMARY

Embodiments of this application provide a network threat processing method and a communication apparatus, so that a large quantity of node devices in a network can detect abnormal events in a distributed manner, thereby reducing consumption of network bandwidth resources, storage resources, and processing resources. The invention is set out in the appended set of claims.

To resolve the foregoing technical problem, embodiments of this application provide the following technical solutions.

According to a first aspect, an embodiment of this application provides a network threat processing method, including:

A first node device detects a first abnormal behavior on the first node device;

the first node device determines, based on the first abnormal behavior and first abnormal event information, that a condition for generating threat burst information is met, and generates the threat burst information, where the first abnormal event information is sent by a second node device before the first node device detects the first abnormal behavior, the first abnormal event information includes attribute description information of a first abnormal event, an attack phase of the first abnormal event, and an attack type of the first abnormal event, the threat burst information includes attribute description information of a second abnormal event and threat degree information corresponding to the second abnormal event, and the second abnormal event is generated through association based on the first abnormal event and the first abnormal behavior; and the first node device determines a handling measure for the second abnormal event based on the threat burst information.

In the method provided in this embodiment of this application, the first node device communicates with the second node device, and the first node device can receive the first abnormal event information from the second node device. The first node device detects the first abnormal behavior. The first node device determines, based on the detected first abnormal behavior and the first abnormal event information, that the condition for generating the threat burst information is met, and generates the threat burst information. The first node device further determines the handling measure for the second abnormal event in the threat burst information based on the threat burst information, so that the first node device can detect an abnormal event, and the first node device further determines the handling measure for the abnormal event. Therefore, in this embodiment of this application, the node device in a network can detect the abnormal event without reporting a log, so that consumption of network bandwidth resources, storage resources, and processing resources is reduced, and network traffic, storage resources, and processing resources are saved.

Optionally, that the first node device determines, based on the first abnormal behavior and first abnormal event information, that a condition for generating threat burst information is met includes:

The first node device obtains a network location of the first node device and a service attribute corresponding to the first node device; and the first node device determines, based on the first abnormal behavior, the first abnormal event information, the network location of the first node device, and the service attribute corresponding to the first node device, that the condition for generating the threat burst information is met.

In this optional manner, when detecting the first abnormal behavior, the first node device can determine, based on the first abnormal behavior, the first abnormal event information, the network location of the first node device, and the service attribute of the first node device, that threat burst occurs, and generate the threat burst information. Therefore, the node device in the network can determine whether to perform the threat burst, and can detect an abnormal behavior without centralized traffic reporting, to reduce consumption of network bandwidth resources, storage resources, and processing resources, thereby saving network traffic, storage resources, and processing resources. In addition, the first node device and the second node device are located in a real network environment. Therefore, in this embodiment of this application, abnormal event detection can be performed based on the real network environment, and this embodiment has a feature of strong real-time performance. Further, the first node device further determines, with reference to the network location of the first node device and the service attribute corresponding to the first node device, that the condition for generating the threat burst information is met. The network location and the service attribute of the first node device are used to determine whether to perform the threat burst. Compared with determining, by using the first abnormal behavior and the first abnormal event information, whether to perform the threat burst, more accurate detection of the abnormal event can be implemented.

Optionally, the method includes:

The first node device detects a second abnormal behavior on the first node device;

the first node device determines, based on the second abnormal behavior and third abnormal event information, that the condition for generating the threat burst information is not met, and generates fourth abnormal event information, where the third abnormal event information is sent by a third node device before the first node device detects the second abnormal behavior, the third abnormal event information includes attribute description information of a third abnormal event, an attack phase of the third abnormal event, and an attack type of the third abnormal event, and a fourth abnormal event is generated through association based on the third abnormal event and the second abnormal behavior; and

the first node device sends the fourth abnormal event information to a network to which the first node device belongs.

In this optional manner, the first node device can detect the abnormal event, and the first node device sends the abnormal event information to the network before the condition for generating the threat burst information is met, so that the abnormal event information is diffused in a timely manner. In this way, another node device that receives the fourth abnormal event information determines whether to perform the threat burst. Therefore, in this embodiment of this application, the node device in the network can detect the abnormal event without reporting a log, to reduce consumption of network bandwidth resources, storage resources, and processing resources, thereby saving network traffic, storage resources, and processing resources.

Optionally, that the first node device determines, based on the second abnormal behavior and third abnormal event information, that the condition for generating the threat burst information is not met includes:

The first node device obtains the network location of the first node device and the service attribute corresponding to the first node device; and

the first node device determines, based on the second abnormal behavior, the third abnormal event information, the network location of the first node device, and the service attribute corresponding to the first node device, that the condition for generating the threat burst information is not met.

Optionally, the first abnormal event information is sent by the second node device according to a diffusion protocol.

Optionally, that the first node device determines, based on the first abnormal behavior and first abnormal event information, that a condition for generating threat burst information is met includes:

The first node device determines an attack phase of the first abnormal behavior and an attack type of the first abnormal behavior based on the first abnormal behavior and the first abnormal event information;

the first node device determines a first attack phase weight value of the first abnormal behavior based on the attack phase of the first abnormal behavior, where the first attack phase weight value indicates importance of the attack phase of the first abnormal behavior for determining whether the condition for generating the threat burst information is met;

the first node device determines a first attack type weight value of the first abnormal behavior based on the attack type of the first abnormal behavior, where the first attack type weight value indicates importance of the attack type of the first abnormal behavior for determining whether the condition for generating the threat burst information is met;

the first node device obtains a first threat burst parameter value of the first node device based on the first attack phase weight value and the first attack type weight value; and

when the first threat burst parameter value is greater than a preset first burst threshold, the first node device determines that the condition for generating the threat burst information is met.

In this optional manner, after obtaining the first threat burst parameter value, the first node device compares the first threat burst parameter value with the first burst threshold, and determines, based on a comparison result, whether the condition for generating the threat burst information is met. For example, if a larger threat burst parameter value indicates a higher risk of a threat, when the first threat burst parameter value is greater than the preset first burst threshold, the first node device determines that the condition for generating the threat burst information is met.

Optionally, that the first node device obtains a first threat burst parameter value of the first node device based on the first attack phase weight value and the first attack type weight value includes:

The first node device obtains the first threat burst parameter value in the following manner:

$$M1=S*K,$$

where
M1 represents the first threat burst parameter value, S represents the first attack phase weight value, K represents the first attack type weight value, and * represents a multiplication operation.

In this optional manner, the first attack phase weight value and the first attack type weight value are jointly used to determine the first threat burst parameter value of the first node device. For example, a result of multiplying the first attack phase weight value by the first attack type weight value is used as the first threat burst parameter value of the first node device. The foregoing calculation manner is merely an example, and is not intended to limit this embodiment of this application. The first threat burst parameter value obtained based on the foregoing calculation formula can be used to determine whether the threat burst occurs.

Optionally, that the first node device determines, based on the first abnormal behavior, the first abnormal event information, the network location of the first node device, and the service attribute corresponding to the first node device, that the condition for generating the threat burst information is met includes:

The first node device determines an attack phase of the first abnormal behavior and an attack type of the first abnormal behavior based on the first abnormal behavior and the first abnormal event information;
the first node device determines a first attack phase weight value of the first abnormal behavior based on the attack phase of the first abnormal behavior, where the first attack phase weight value indicates importance of the attack phase of the first abnormal behavior for determining whether the condition for generating the threat burst information is met;

the first node device determines a first attack type weight value of the first abnormal behavior based on the attack type of the first abnormal behavior, where the first attack type weight value indicates importance of the attack type of the first abnormal behavior for determining whether the condition for generating the threat burst information is met;
the first node device determines a first network asset weight value of the first node device based on the network location of the first node device and the service attribute corresponding to the first node device, where the first network asset weight value indicates asset importance of the first node device in a network to which the first node device belongs;
the first node device obtains a second threat burst parameter value of the first node device based on the first attack phase weight value, the first attack type weight value, and the first network asset weight value; and
when the second threat burst parameter value is greater than a preset second burst threshold, the first node device determines that the condition for generating the threat burst information is met.

In this optional manner, after obtaining the second threat burst parameter value, the first node device compares the second threat burst parameter value with the second burst threshold, and determines, based on a comparison result, whether the condition for generating the threat burst information is met. For example, if a larger threat burst parameter value indicates a higher risk of a threat, when the second threat burst parameter value is greater than the preset second burst threshold, the first node device determines that the condition for generating the threat burst information is met.

Optionally, that the first node device obtains a second threat burst parameter value of the first node device based on the first attack phase weight value, the first attack type weight value, and the first network asset weight value includes:

The first node device obtains the second threat burst parameter value in the following manner:

$$M2=A*S*K,$$

where
M2 represents the second threat burst parameter value, A represents the first network asset weight value, S represents the first attack phase weight value, K represents the first attack type weight value, and * represents a multiplication operation.

Optionally, that the first node device obtains a second threat burst parameter value of the first node device based on the first attack phase weight value, the first attack type weight value, and the first network asset weight value includes:

The first node device determines attack duration information of the first abnormal behavior and attack path depth information of the first abnormal behavior based on the first abnormal behavior and the attribute description information of the first abnormal event; and
the first node device obtains the second threat burst parameter value based on the first attack phase weight value, the first attack type weight value, the first network asset weight value, the attack duration information of the first abnormal behavior, and the attack path depth information of the first abnormal behavior.

**In** this optional manner, the first attack phase weight value, the first attack type weight value, the first network asset weight value, the attack duration information of the first abnormal behavior, and the attack path depth information of the first abnormal behavior are a plurality of weight values obtained by the first node device, and the second threat burst parameter value is calculated by using the plurality of weight values.

Optionally, that the first node device obtains the second threat burst parameter value based on the first attack phase weight value, the first attack type weight value, the first network asset weight value, the attack duration information of the first abnormal behavior, and the attack path depth information of the first abnormal behavior includes:

The first node device obtains the second threat burst parameter value in the following manner:

$$M2 = N * A * S * K * T,$$

where
M2 represents the second threat burst parameter value, N represents the attack path depth information of the first abnormal behavior, A represents the first network asset weight value, S represents the first attack phase weight value, K represents the first attack type weight value, T represents the attack duration information of the first abnormal behavior, and * represents a multiplication operation.

Optionally, that the first node device determines, based on the second abnormal behavior and third abnormal event information, that the condition for generating the threat burst information is not met includes:

The first node device determines an attack phase of the second abnormal behavior and an attack type of the second abnormal behavior based on the second abnormal behavior and the third abnormal event information;

the first node device determines a second attack phase weight value of the second abnormal behavior based on the attack phase of the second abnormal behavior, where the second attack phase weight value indicates importance of the attack phase of the second abnormal behavior for determining whether the condition for generating the threat burst information is met;
the first node device determines a second attack type weight value of the second abnormal behavior based on the attack type of the second abnormal behavior, where the second attack type weight value indicates importance of the attack type of the second abnormal behavior for determining whether the condition for generating the threat burst information is met;
the first node device obtains a third threat burst parameter value of the first node device based on the second attack phase weight value and the second attack type weight value; and
when the third threat burst parameter value is less than or equal to a preset third burst threshold, the first node device determines that the condition for generating the threat burst information is not met.

Optionally, that the first node device determines, based on the second abnormal behavior and third abnormal event information, that the condition for generating the threat burst information is not met includes:

The first node device determines an attack phase of the second abnormal behavior and an attack type of the second abnormal behavior based on a second abnormal behavior and the second abnormal event information;
the first node device determines a second attack phase weight value of the second abnormal behavior based on the attack phase of the second abnormal behavior, where the second attack phase weight value indicates importance of the attack phase of the second abnormal behavior for determining whether the condition for generating the threat burst information is met;
the first node device determines a second attack type weight value of the second abnormal behavior based on the attack type of the second abnormal behavior, where the second attack type weight value indicates importance of the attack type of the second abnormal behavior for determining whether the condition for generating the threat burst information is met;
the first node device determines a first network asset weight value of the first node device based on the network location of the first node device and the service attribute corresponding to the first node device, where the first network asset weight value indicates asset importance of the first node device in a network to which the first node device belongs;

the first node device obtains a fourth threat burst parameter value of the first node device based on the second attack phase weight value, the second attack type weight value, and the first network asset weight value; and

when the fourth threat burst parameter value is less than or equal to a preset third burst threshold, the first node device determines that the condition for generating the threat burst information is not met.

Optionally, that the first node device determines a handling measure for the second abnormal event based on the threat burst information includes:

The first node device determines, based on the threat burst information, a node device that executes the handling measure, and triggers the node device that executes the handling measure to execute the handling measure.

In this optional manner, after generating the threat burst information, the first node device selects, from the network to which the first node device belongs by using the threat burst information, the node device that executes the handling measure. For example, the node device that executes the handling measure is a trap node selected by the first node device, and the handling measure for the second abnormal event is executed on the trap node, so as to eliminate a threat in the network.

Optionally, that the first node device determines, based on the threat burst information, a node device that executes the handling measure includes:

The first node device determines a first network asset weight value of the first node device based on the network location of the first node device and the service attribute corresponding to the first node device, where the first network asset weight value indicates asset importance of the first node device in a network to which the first node device belongs; the first node device obtains attack duration information of the second abnormal event; the first node device determines, based on a preset node selection table, a candidate node device set corresponding to a combination of the first network asset weight value and the attack duration information of the second abnormal event, where the node selection table includes a correspondence among a network asset weight value, attack duration information, and a candidate node device; and the first node device selects, from the candidate node device set, a candidate node device as the node device that executes the handling measure, where the selected candidate node device is a candidate node device that is in the candidate node device set and that has a shortest topological distance from the first node device.

In this optional manner, after obtaining the candidate node device set, the first node device selects, from the candidate node device set according to a shortest topological distance principle, a candidate node device as the node device that executes the handling measure. That is, the selected candidate node device is a candidate node device that is in the candidate node device set and that has a shortest topological distance from the first node device.

Optionally, when the node device that executes the handling measure is the first node device, the method further includes:

The first node device executes the handling measure for the second abnormal event based on the threat burst information.

In this optional manner, the first node device analyzes, based on the threat burst information, the second abnormal event included in the threat burst information, so as to determine the handling measure for the second abnormal event. If it is determined that the first node device executes the handling measure, the first node device executes the handling measure for the second abnormal event based on the threat burst information. In this embodiment of this application, a specific manner of the handling measure needs to be combined with an application scenario. In this embodiment of this application, the first node device executes the handling measure for the second abnormal event, so that a threat can be found in the network, and the abnormal event can be handled, so that the network can run normally.

Optionally, that the first node device executes the handling measure for the second abnormal event based on the threat burst information includes:

When the second abnormal event is a malicious connection, the first node device blocks the connection; and/or
when the second abnormal event is a malicious process, the first node device clears the process; and/or
when the second abnormal event is a malicious permission, the first node device modifies the permission; and/or
when the second abnormal event is tampering with a file, the first node device repairs the file; and/or
when the second abnormal event is an exception of a memory, the first node device performs software and hardware resetting on the memory.

In this optional manner, an attribute of the second abnormal event is implemented in a plurality of manners. In an implementation, when the second abnormal event is a malicious connection, the first node device blocks the connection. Therefore, automatic blocking of the malicious connection is implemented in the network.

In another implementation, when the second abnormal event is a malicious process, the first node device clears the process. Therefore, automatic clearing of the malicious process is implemented in the network.

In another implementation, when the second abnormal event is malicious permission, the first node device modifies the permission. Therefore, automatic control of the malicious permission is implemented in the network.

In another implementation, when the second abnormal event is tampering with a file, the first node device repairs the file. Therefore, automatic repair of the tampered file is implemented in the network.

In another implementation, when the second abnormal event is an exception of a memory, the first node device performs software and hardware resetting on the memory. Therefore, automatic resetting of the memory is implemented in the network.

According to a second aspect, an embodiment of this application further provides a network threat processing system, including a first node device and a second node device, where

the second node device is configured to: send first abnormal event information to the first node device, where the first abnormal event information includes attribute description information of a first abnormal event, an attack phase of the first abnormal event, and an attack type of the first abnormal event; and
the first node device is configured to: detect a first abnormal behavior on the first node device; determine, based on the first abnormal behavior and the first abnormal event information, that a condition for generating threat burst information is met, and generate the threat burst information, where the threat burst information includes attribute description information of a second abnormal event and threat degree information corresponding to the second abnormal event, and the second abnormal event is generated through association based on the first abnormal event and the first abnormal behavior; and determine a handling measure for the second abnormal event based on the threat burst information.

Optionally, the system further includes a third node device, where

the third node device is configured to send third abnormal event information to the first node device, where the third abnormal event information includes attribute description information of a third abnormal event, an attack phase of the third abnormal event, and an attack type of the third abnormal event; and
the first node device is configured to: detect a second abnormal behavior on the first node device; determine, based on the second abnormal behavior and the third abnormal event information, that the condition for generating the threat burst information is not met, and generate fourth abnormal event information, where a fourth abnormal event is generated through association based on the third abnormal event and the second abnormal behavior; and send the fourth abnormal event information to a network to which the first node device belongs.

Optionally, the system further includes a fourth node device, where

the first node device is configured to: determine, based on the threat burst information, that the fourth node device is to execute the handling measure, and send the threat burst information to the fourth node device; and
the fourth node device is configured to: receive the threat burst information from the first node device, and execute the handling measure for the second abnormal event based on the threat burst information.

Optionally, the fourth node device is configured to: when the second abnormal event is a malicious connection, block the connection; and/or, when the second abnormal event is a malicious process, clear the process; and/or, when the second abnormal event is a malicious permission, modify the permission; and/or, when the second abnormal event is tampering with a file, repair the file; and/or, when the second abnormal event is an exception of a memory, perform software and hardware resetting on the memory.

According to a third aspect, an embodiment of this application provides a communication apparatus, including a memory, a network interface, and at least one processor, where the communication apparatus is a first node device, and the memory is configured to store program code; and

the at least one processor is configured to read the program code stored in the memory, so that the communication apparatus performs the following operations:

detecting a first abnormal behavior on the first node device;
determining, based on the first abnormal behavior and first abnormal event information, that a condition for generating threat burst information is met, and generating the threat burst information, where the first abnormal event information is sent by a second node device before the first node device detects the first abnormal behavior, the first abnormal event information includes attribute description information of a first abnormal event, an attack phase of the first abnormal event, and an attack type of the first abnormal event, the threat burst information includes attribute description information of a second abnormal event and threat degree information corresponding to the second abnormal event, and the second abnormal event is generated through association based on the first abnormal event and the first abnormal behavior; and
determining a handling measure for the second abnormal event based on the threat burst information.

Optionally, after reading the program code stored in the memory, the processor performs the following operations:

obtaining a network location of the first node device and a service attribute corresponding to the first node device; and

determining, based on the first abnormal behavior, the first abnormal event information, the network location of the first node device, and the service attribute corresponding to the first node device, that the condition for generating the threat burst information is met.

The communication apparatus provided in the third aspect has a function of implementing the first aspect or any optional manner of the first aspect.

According to a fourth aspect, an embodiment of this application provides a communication apparatus, where the communication apparatus is a first node device, and the communication apparatus includes:

a detection module, configured to detect a first abnormal behavior on the first node device;

a processing module, configured to: determine, based on the first abnormal behavior and first abnormal event information, that a condition for generating threat burst information is met, and generate the threat burst information, where the first abnormal event information is sent by a second node device before the first node device detects the first abnormal behavior, the first abnormal event information includes attribute description information of a first abnormal event, an attack phase of the first abnormal event, and an attack type of the first abnormal event, the threat burst information includes attribute description information of a second abnormal event and threat degree information corresponding to the second abnormal event, and the second abnormal event is generated through association based on the first abnormal event and the first abnormal behavior; and

a determining module, configured to determine a handling measure for the second abnormal event based on the threat burst information.

Optionally, the processing module is configured to: obtain a network location of the first node device and a service attribute corresponding to the first node device; and determine, based on the first abnormal behavior, the first abnormal event information, the network location of the first node device, and the service attribute corresponding to the first node device, that the condition for generating the threat burst information is met.

The communication apparatus provided in the fourth aspect has a function of implementing the method in the first aspect or any optional manner of the first aspect. The function is implemented by hardware, or is implemented by hardware by executing corresponding software. The hardware or the software includes one or more modules corresponding to the foregoing function.

According to a fifth aspect, a network threat processing system is provided, and the network threat processing system includes a first node device and a second node device, where

the second node device is configured to: send first abnormal event information to the first node device, where the first abnormal event information includes attribute description information of a first abnormal event, an attack phase of the first abnormal event, and an attack type of the first abnormal event; and

the first node device performs a function of the method in the first aspect or any optional manner of the first aspect.

According to a sixth aspect, a computer-readable storage medium is provided. The storage medium stores at least one instruction. When the instruction is run on a computer, the computer is enabled to perform the method in the first aspect or any optional manner of the first aspect.

According to a seventh aspect, a computer program product is provided. The computer program product includes one or more computer program instructions. When the computer program instructions are loaded and run by a computer, the computer is enabled to perform the method in the first aspect or any optional manner of the first aspect.

According to an eighth aspect, a chip is provided, including a memory and a processor. The memory is configured to store a computer instruction, and the processor is configured to: invoke the computer instruction from the memory and run the computer instruction, to perform the method provided in the first aspect or any optional manner of the first aspect.

**BRIEF DESCRIPTION OF DRAWINGS**

FIG. 1a is a schematic diagram of an architecture of a network threat processing system according to an embodiment of this application;

FIG. 1b is a schematic diagram of an architecture of a network threat processing system according to an embodiment of this application;

FIG. 1c is a schematic diagram of an architecture of a network threat processing system according to an embodiment of this application;

FIG. 2 is a schematic diagram of a composition structure of a first node device according to an embodiment of this application;

FIG. 3 is a schematic flowchart of a network threat processing method according to an embodiment of this application;

FIG. 4 is a schematic flowchart of a network threat processing method according to an embodiment of this application;

FIG. 5 is a schematic flowchart of a network threat processing method according to an embodiment of this application;

FIG. 6 is a schematic flowchart of interaction between a first node device and a second node device according to an embodiment of this application;

FIG. 7 is a schematic flowchart of interaction between a first node device and a second node device according to an embodiment of this application;

FIG. 8 is a schematic flowchart of interaction between a first node device and a second node device according to an embodiment of this application;

FIG. 9 is a schematic diagram of an application scenario according to an embodiment of this application;

FIG. 10a is a schematic diagram of an application scenario according to an embodiment of this application;

FIG. 10b to FIG. 10e are schematic diagrams of an abnormal event diffusion process according to an embodiment of this application; and

FIG. 11 is a schematic diagram of a composition structure of a first node device according to an embodiment of this application.

## DESCRIPTION OF EMBODIMENTS

Embodiments of this application provide a network threat processing method and a communication apparatus, so that a large quantity of node devices in a network can detect abnormal events in a distributed manner, thereby reducing consumption of network bandwidth resources, storage resources, and processing resources.

Currently, network attacks and vulnerability of network devices affect network security. In a current technology, network traffic logs from each network element and host logs are mainly collected centrally by using a dedicated analysis server in a network, and association analysis is performed on the network traffic logs and the host logs, to further discover abnormal events caused by abnormal behaviors such as network attacks. In this solution, an abnormal event in the network can be detected through association analysis only after the abnormal event has generated a threat in the network.

A solution of centralized analysis and response mainly includes the following three aspects.

1. Information collection: Terminal logs and network traffic logs are collected and are centrally stored in a big data security analysis and storage center.

2. Security detection: The dedicated analysis server performs offline analysis on the stored data to discover hidden exceptions and threats in events. For example, analysis needs to be performed based on an order of events and an association relationship between the events.

3. Event response: A manual or automatic restoration and blocking response is made to an abnormal event.

In the foregoing centralized analysis solution, the network traffic logs and the host logs need to be sent centrally. A data amount is quite large, consumption on the network and performance is large, and costs are high. In addition, the centralized analysis is a big data analysis that has been performed without a real network environment. Due to lack of the real network environment, pertinence of the centralized analysis and a cross-validation capability of the network element are poor, and real-time performance is poor. In addition, the dedicated analysis server consumes a large amount of time to perform association analysis on a large quantity of various logs. Therefore, a detection lag is usually obvious.

In view of this, an embodiment of this application provides a network threat analysis system. A node device (hereinafter a node for short) in the system detects an abnormal behavior in a network, can determine whether a condition for generating threat burst information is met, generate the threat burst information when the condition is met, and determine a handling measure for an abnormal event based on the threat burst information. A plurality of node devices in the foregoing system provided in this embodiment of this application synchronize abnormal event information, and each node device implements abnormal behavior detection based on the synchronized abnormal event information and a detection capability of the node device. In other words, the plurality of node devices in the system have a capability of distributed collaborative detection. Compared with a current solution that relies on centralized analysis, this solution has advantages of saving network traffic resources, reducing storage resources and processing resources, and improving detection timeliness.

The network threat analysis system provided in this embodiment of this application includes a plurality of node devices, where the plurality of node devices belong to a network, and a single node device is connected to another node device in the network. A connection between the node devices is used to propagate a message. For example, a node device can generate an abnormal event. The abnormal event is an event generated by a node device in the network by detecting an abnormal behavior. For example, the abnormal event is a scanning event. A type of the abnormal event is not limited in this embodiment of this application. The type of the abnormal event is specifically determined with reference to an application scenario. A node device propagates abnormal event information to another node device based on a connection between the node device and another node device. For example, the node device in the network diffuses the abnormal event according to a diffusion protocol. Optionally, the diffusion protocol is a Gossip (Gossip) protocol.

For example, in this embodiment of this application, each node device establishes an attack graph based on the received abnormal event information from another node device. The attack graph includes one or more attack paths, and the attack path includes a plurality of node devices in the network. The node device can generate a to-be-propagated abnormal event by using information in the attack graph and the abnormal behavior that is detected by the node device.

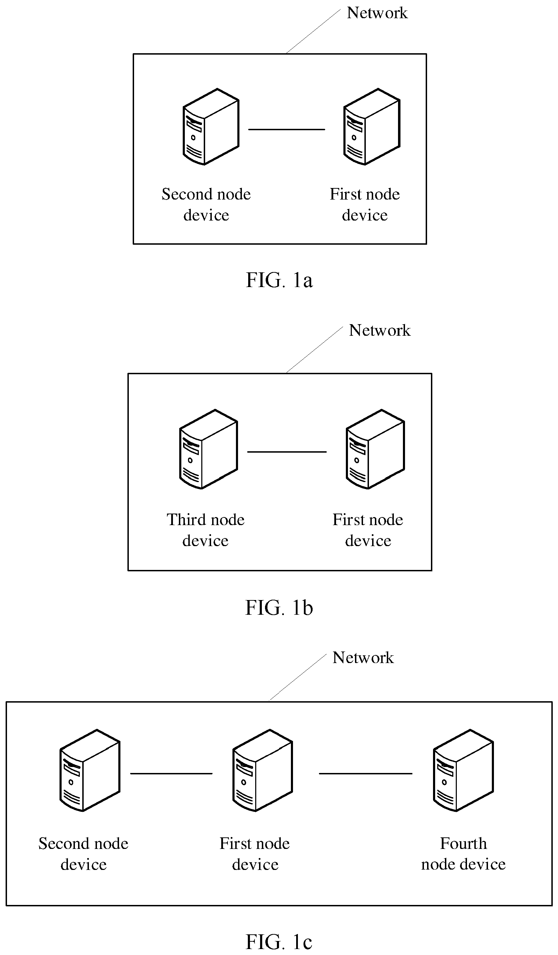

As shown in FIG. 1a, a network threat analysis system provided in this embodiment of this application includes a first node device and a second node device. A communication connection is established between the first node device and the second node device. The following first separately describes the first node device and the second node device in an application scenario with reference to FIG. 1a.

The second node device shown in FIG. 1a is first described. The second node device is a node device in the network. The second node device detects an abnormal behavior in the network, and generates first abnormal event information based on the abnormal behavior. For example, the second node device detects the abnormal behavior in the network, and generates the first abnormal event information when detecting the abnormal behavior.

The second node device is implemented by a network element or a host (that is, a network node in a subsequent embodiment) on which software has been installed in the network. The software includes program code of a network threat processing method provided in embodiments of this application. For example, the second node device is a network element on which a security component is installed. After the second node device runs the security component, the network element on which the security component is installed can perform an abnormal behavior detection function and an abnormal event handling function. For example, the second node device diffuses, based on the diffusion protocol, a generated abnormal event in the network to which the second node device belongs.

The following describes the first node device shown in FIG. 1a. The first node device is a node device in the network, and the first node device detects an abnormal behavior in the network. The first node device can further receive abnormal event information sent by another node device in the network. For example, the first node device receives the first abnormal event information sent by the second node device, and after receiving the first abnormal event information, the first node device stores the first abnormal event information.

The first node device detects a first abnormal behavior on the first node device. A destination of the first abnormal behavior is the first node device. When the first node device detects the first abnormal behavior, the first node device determines whether to perform threat burst. The threat burst means that the first node device determines, based on the first abnormal behavior and the received first abnormal event information, that the condition for generating the threat burst information is met, and generates the threat burst information. The first node device determines, based on the threat burst information, a handling measure for a second abnormal event included in the threat burst information.

The first node device is implemented by the network element or the host (that is, the network node in the subsequent embodiment) on which software has been installed in the network. The software includes the program code of the network threat processing method provided in embodiments of this application. For example, the first node device is a network element on which a security component is installed. After the first node device runs the security component, the network element on which the security component is installed performs an abnormal behavior detection function, a threat burst determining function, and an abnormal event handling function. The abnormal event handling function is also referred to as an abnormal event capture function.

In this embodiment of this application, the security component is a resilient component. The resilient component is a secure and reliable component system that provides a network resiliency capability. The network resiliency capability is a capability of the component system to expect, withstand, recover, and adapt in adverse conditions.

As shown in FIG. 1b, a network threat analysis system provided in an embodiment of this application includes a first node device and a third node device. A communication connection is established between the first node device and the third node device. A difference between FIG. 1b and FIG. 1a lies in that, in FIG. 1a, the first node device determines, for the first abnormal event information sent by the second node device, that the condition for generating the threat burst information is met, and in FIG. 1b, the first node device determines, for the third abnormal event information sent by the third node device, that the condition for generating the threat burst information is not met.

The following separately describes the first node device and the third node device in FIG. 1b.

First, the first node device shown in FIG. 1b is described. The first node device is a node device in the network, and the first node device detects an abnormal behavior in the network. The first node device further receives abnormal event information sent by another node device in the network. For example, the first node device detects a second abnormal behavior on the first node device. The first node device receives the third abnormal event information sent by the third node device, and after receiving the third abnormal event information, the first node device stores the third abnormal event information.

The first node device detects the second abnormal behavior, and a destination of the second abnormal behavior is the first node device. When the first node device detects the second abnormal behavior, the first node device determines whether to perform threat burst. For example, the first node device determines, based on the second abnormal behavior and the third abnormal event information, that the condition for generating the threat burst information is not met. In this case, the first node device does not perform threat burst, but generates fourth abnormal event information. A fourth abnormal event is generated through association based on the third abnormal event and the second abnormal behavior. When the first node device does not perform threat burst, the first node device sends the fourth abnormal event information to the network to which the first node device belongs, that is, the first node device diffuses the abnormal event.

The first node device is implemented by the network element or the host (that is, the network node in the subsequent embodiment) on which software has been installed in the network. The software includes the program code of the network threat processing method provided in embodiments of this application. For example, the first node device is a network element on which a security component is installed. After the first node device runs the security component, the network element on which the security component is installed performs an abnormal behavior detection function, a threat burst determining function, and an abnormal event handling function. For example, the abnormal event handling function is that the first node device diffuses, based on the diffusion protocol, the abnormal event in the network to which the first node device belongs.

The following describes the third node device shown in FIG. 1b. The third node device is a node device in the network, and the third node device generates the third abnormal event information. For example, the third node device can detect an abnormal behavior in the network, and when detecting the abnormal behavior, the third node device generates the third abnormal event information.

The third node device is implemented by the network element or the host (that is, the network node in the subsequent embodiment) on which software has been installed in the network. The software includes the program code of the network threat processing method provided in embodiments of this application. For example, the third node device is a network element on which a security component is installed. After the third node device runs the security component, the network element on which the security component is installed performs an abnormal behavior detection function and an abnormal event handling function. For example, the third node device diffuses, based on the diffusion protocol, the abnormal event in the network to which the third node device belongs.

As shown in FIG. 1c, a network threat analysis system provided in an embodiment of this application includes a first node device, a second node device, and a fourth node device. A communication connection is established between the first node device and the second node device, and a communication connection is established between the first node device and the fourth node device. The following separately describes the first node device and the third node device in FIG. 1c.

The second node device shown in FIG. 1c has a same function as the second node device shown in FIG. 1a, and details are not described herein again.

The following describes the first node device shown in FIG. 1c. In addition to having the function of the first node device shown in FIG. 1a, the first node device further determines, based on the threat burst information, that the fourth node device is to execute a handling measure, and sends the threat burst information to the fourth node device.

The following describes the fourth node device shown in FIG. 1c. The fourth node device executes the handling measure for the abnormal event. For example, the fourth node device receives the threat burst information from the first node device, and executes, based on the threat burst information, the handling measure for the second abnormal event included in the threat burst information.

The fourth node device is implemented by the network element or the host (that is, the network node in the subsequent embodiment) on which software has been installed in the network. The software includes the program code of the network threat processing method provided in embodiments of this application. For example, the fourth node device is a network element on which a security component is installed. After the fourth node device runs the security component, the network element on which the security component is installed performs an abnormal event handling function. For example, the fourth node device executes a preset handling measure for the abnormal event, and generates a handling result. Optionally, the fourth node device diffuses, based on the diffusion protocol, the handling result in the network to which the fourth node device belongs.

The following describes in detail a plurality of events and information in embodiments of this application.

    (1) Abnormal behavior.
    The abnormal behavior is detected by a node device in a network. For example, the node device detects an abnormal control operation based on content of a received or sent packet, or detects an abnormal operation about a registry or a file based on a monitoring mechanism of an operating system. For example, the abnormal operation includes addition, deletion, modification, or the like.
    (2) Abnormal event.
    The abnormal event is a record generated by a node device in a network based on a detected abnormal behavior. For example, when the node device determines that a condition for generating threat burst information is not met, the node device generates a new abnormal event based on the detected abnormal behavior and an abnormal event that is pre-stored by the node device. For example, the abnormal event is a scanning event, a file tampering event, or the like.

(3) Threat burst information.

When a node device in a network detects an abnormal behavior, the node device determines whether a condition for generating the threat burst information is met, and if the condition for generating the threat burst information is met, the node device generates the threat burst information. In this case, the node device is referred to as a threat burst node. The threat burst information includes attribute description information of an abnormal event and threat degree information corresponding to the abnormal event. For example, the threat degree information includes an indicator of a high or low threat degree of an abnormal event.

It should be noted that the terms such as "first" and "second" in this application are used to distinguish between same items or similar items with basically same effects and functions. There is no logical or timing dependency between "first" and "second", and a quantity and an execution order are not limited, for example, the foregoing "first node device", "second node device", and "third node device". The foregoing "first node device", "second node device", "third node device", and the like are described by using a plurality of node devices involved in an abnormal event processing process as an example. For processing processes of different abnormal events or at different time points, functions executed by the node devices may be exchanged. For example, for an abnormal event, a node device is not a threat burst node (the second node device in FIG. 1a to FIG. 1c), and for another abnormal event, the same node device is a threat burst node (the first node device in FIG. 1b).

In addition, in embodiments of this application, when the second node device appears in an embodiment, that the first node device needs to appear is not limited. Similarly, when the third node device appears in an embodiment, that the first node device or the second node device needs to appear is not limited.

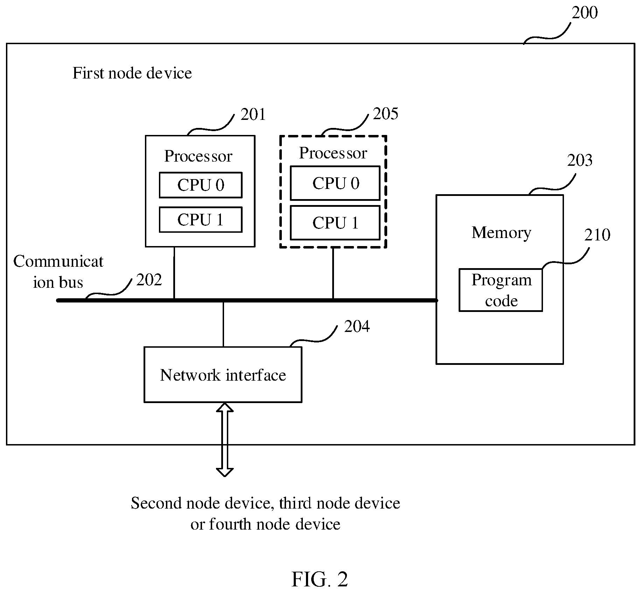

The following describes a hardware structure of a node device in the network threat analysis system. For example, the first node device in the network threat analysis system is used as an example. For a hardware structure of another node device, also refer to the description of the hardware structure of the first node device. FIG. 2 is a schematic diagram of a structure of a first node device according to an embodiment of this application. Optionally, the first node device having the structure shown in FIG. 2 is the first node device in FIG. 1a, FIG. 1b, and FIG. 1c.

FIG. 2 is a schematic diagram of a structure of a first node device 200 according to an example embodiment of this application. The first node device 200 is implemented by using a general bus architecture.

The first node device 200 includes at least one processor 201, a communication bus 202, a memory 203, and at least one network interface 204.

The processor 201 is, for example, a general-purpose central processing unit (central processing unit, CPU), a network processor (network processor, NP), a graphics processing unit (graphics processing unit, GPU), a neural-network processing unit (neural-network processing units, NPU), a data processing unit (data processing unit, DPU), a microprocessor, or one or more integrated circuits configured to implement the solutions of this application. For example, the processor 201 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field-programmable gate array (field-programmable gate array, FPGA), a generic array logic (generic array logic, GAL), or any combination thereof.

The communication bus 202 is configured to transmit information between the foregoing components. The communication bus 202 is classified into an address bus, a data bus, a control bus, and the like. For ease of representation, only one thick line is used to represent the bus in FIG. 2, but this does not indicate that there is only one bus or only one type of bus.

The memory 203 Is, for example, a read-only memory (read-only memory, ROM), another type of static storage device that can store static information and instructions, or a random access memory (random access memory, RAM), or another type of dynamic storage device that can store information and instructions, or an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium, another magnetic storage device, or any other medium that can be used to carry or store expected program code in a form of an instruction or a data structure and that can be accessed by a computer, but is not limited thereto. For example, the memory 203 exists independently, and is connected to the processor 201 by using the communication bus 202. The memory 203 and the processor 201 are integrated together.

The network interface 204 uses any apparatus such as a transceiver, and is configured to communicate with another device or a communication network. The network interface 204 includes a wired communication interface, and further includes a wireless communication interface. The wired communication interface is, for example, an Ethernet interface. The Ethernet interface is an optical interface, an electrical interface, or a combination thereof. The wireless communication interface is a wireless local area network (wireless local area networks, WLAN) interface, a cellular network communication interface, or a combination thereof. For example, the network interface 204 of the first node device may be configured to communicate with another node device in the network. For example, the network interface 204 is configured to communicate with any one of the second node device, the third node device, and the fourth node device.

Optionally, in an embodiment, the processor 201 includes one or more CPUs, such as the processor 201 and the processor 205 shown in FIG. 2. Each of these processors is a single-core processor (single-CPU), or may be a multi-core processor (multi-CPU). The processor herein is one or more devices, circuits, and/or processing cores configured to process data (for example, computer program instructions). Optionally, when the processor is a multi-core CPU, one CPU includes a CPU 0 and a CPU 1 shown in FIG. 2.

In a specific implementation, in an embodiment, the first node device 200 further includes an output device and an input device. The output device communicates with the processor 201, and displays information in a plurality of manners. For example, the output device is a liquid crystal display (liquid crystal display, LCD), a light emitting diode (light emitting diode, LED) display device, a cathode ray tube (cathode ray tube, CRT) display device, a projector (projector), or the like. The input device communicates with the processor 201, and receives a user input in a plurality of manners. For example, the input device is a mouse, a keyboard, a touchscreen device, or a sensing device.

Optionally, the memory 203 is configured to store program code executed by the processor 201 and received abnormal event information sent by another node device. The memory 203 is further configured to store program code 210 for executing the solution of this application. After executing the program code 210 stored in the memory 203, the processor 201 performs the following operations: detecting a first abnormal behavior on the first node device; determining, based on the first abnormal behavior and first abnormal event information, that a condition for generating threat burst information is met, and generating the threat burst information, where the first abnormal event information is sent by a second node device before the first node device detects the first abnormal behavior, the first abnormal event information includes attribute description information of a first abnormal event, an attack phase of the first abnormal event, and an attack type of the first abnormal event, the threat burst information includes attribute description information of a second abnormal event and threat degree information corresponding to the second abnormal event, and the second abnormal event is generated through association based on the first abnormal event and the first abnormal behavior; and determining a handling measure for the second abnormal event based on the threat burst information.

Optionally, after reading the program code 210 stored in the memory 203, the processor 201 further performs the following operations: obtaining a network location of the first node device and a service attribute corresponding to the first node device; and determining, based on the first abnormal behavior, the first abnormal event information, the network location of the first node device, and the service attribute corresponding to the first node device, that the condition for generating the threat burst information is met.

Optionally, after reading the program code 210 stored in the memory 203, the processor 201 further performs the following operations: detecting a second abnormal behavior on the first node device; determining, based on the second abnormal behavior and third abnormal event information, that the condition for generating the threat burst information is not met, and generating fourth abnormal event information, where the third abnormal event information is sent by a third node device before the first node device detects the second abnormal behavior, the third abnormal event information includes attribute description information of a third abnormal event, an attack phase of the third abnormal event, and an attack type of the third abnormal event, and a fourth abnormal event is generated through association based on the third abnormal event and the second abnormal behavior; and sending the fourth abnormal event information to a network to which the first node device belongs.

Optionally, after reading the program code 210 stored in the memory 203, the processor 201 further performs the following operations: obtaining the network location of the first node device and the service attribute corresponding to the first node device; and determining, based on the second abnormal behavior, the third abnormal event information, the network location of the first node device, and the service attribute corresponding to the first node device, that the condition for generating the threat burst information is not met.

Optionally, the first abnormal event information stored in the memory 203 is sent by the second node device according to a diffusion protocol.

Optionally, after reading the program code 210 stored in the memory 203, the processor 201 further performs the following operations: determining an attack phase of the first abnormal behavior and an attack type of the first abnormal behavior based on the first abnormal behavior and the first abnormal event information; determining a first attack phase weight value of the first abnormal behavior based on the attack phase of the first abnormal behavior, where the first attack phase weight value indicates importance of the attack phase of the first abnormal behavior for determining whether the condition for generating the threat burst information is met; determining a first attack type weight value of the first abnormal behavior based on the attack type of the first abnormal behavior, where the first attack type weight value indicates importance of the attack type of the first abnormal behavior for determining whether the condition for generating the threat burst information is met; obtaining a first threat burst parameter value of the first node device based on the first attack phase weight value and the first attack type weight value; and when the first threat burst parameter value is greater than a preset first burst threshold, determining that the condition for generating the threat burst information is met.

Optionally, after reading the program code 210 stored in the memory 203, the processor 201 further performs the following operation: obtaining the first threat burst parameter value in the following manner: $M1=S*K$, where M1 represents the first threat burst parameter value, S represents the first attack phase weight value, K represents the first attack type weight value, and * represents a multiplication operation.

Optionally, after reading the program code 210 stored in the memory 203, the processor 201 further performs the following operations: determining an attack phase of the first abnormal behavior and an attack type of the first abnormal behavior based on the first abnormal behavior and the first abnormal event information; determining a first attack phase weight value of the first abnormal behavior based on the attack phase of the first abnormal behavior, where the first attack phase weight value indicates importance of the attack phase of the first abnormal behavior for determining whether the condition for generating the threat burst information is met; determining a first attack type weight value of the first abnormal behavior based on the attack type of the first abnormal behavior, where the first attack type weight value indicates importance of the attack type of the first abnormal behavior for determining whether the condition for generating the threat burst information is met; determining a first network asset weight value of the first node device based on the network location of the first node device and the service attribute corresponding to the first node device, where the first network asset weight value indicates asset importance of the first node device in a network to which the first node device belongs; obtaining a second threat burst parameter value of the first node device based on the first attack phase weight value, the first attack type weight value, and the first network asset weight value; and when the second threat burst parameter value is greater than a preset second burst threshold, determining that the condition for generating the threat burst information is met.

Optionally, after reading the program code 210 stored in the memory 203, the processor 201 further performs the following operation:
obtaining the second threat burst parameter value in the following manner: $M2=A*S*K$, where M2 represents the second threat burst parameter value, A represents the first network asset weight value, S represents the first attack phase weight value, K represents the first attack type weight value, and * represents a multiplication operation.

Optionally, after reading the program code 210 stored in the memory 203, the processor 201 further performs the following operations: determining attack duration information of the first abnormal behavior and attack path depth information of the first abnormal behavior based on the first abnormal behavior and the attribute description information of the first abnormal event; and obtaining the second threat burst parameter value based on the first attack phase weight value, the first attack type weight value, the first network asset weight value, the attack duration information of the first abnormal behavior, and the attack path depth information of the first abnormal behavior.

Optionally, after reading the program code 210 stored in the memory 203, the processor 201 further performs the following operation: obtaining the second threat burst parameter value in the following manner: $M2=N*A*S*K*T$, where M2 represents the second threat burst parameter value, N represents the attack path depth information of the first abnormal behavior, A represents the first network asset weight value, S represents the first attack phase weight value, K represents the first attack type weight value, T represents the attack duration information of the first abnormal behavior, and * represents a multiplication operation.

Optionally, after reading the program code 210 stored in the memory 203, the processor 201 further performs the following operations: determining an attack phase of the second abnormal behavior and an attack type of the second abnormal behavior based on the second abnormal behavior and the third abnormal event information; determining a second attack phase weight value of the second abnormal behavior based on the attack phase of the second abnormal behavior, where the second attack phase weight value indicates importance of the attack phase of the second abnormal behavior for determining whether the condition for generating the threat burst information is met; determining a second attack type weight value of the second abnormal behavior based on the attack type of the second abnormal behavior, where the second attack type weight value indicates importance of the attack type of the second abnormal behavior for determining whether the condition for generating the threat burst information is met; obtaining a third threat burst parameter value of the first node device based on the second attack phase weight value and the second attack type weight value; and when the third threat burst parameter value is less than or equal to a preset third burst threshold, determining that the condition for generating the threat burst information is not met.

Optionally, after reading the program code 210 stored in the memory 203, the processor 201 further performs the following operations: determining an attack phase of the second abnormal behavior and an attack type of the second abnormal behavior based on a second abnormal behavior and the second abnormal event information; determining a second attack phase weight value of the second abnormal behavior based on the attack phase of the second abnormal behavior, where the second attack phase weight value indicates importance of the attack phase of the second abnormal behavior for determining whether the condition for generating the threat burst information is met; determining a second attack type weight value of the second abnormal behavior based on the attack type of the second abnormal behavior, where the second attack type weight value indicates importance of the attack type of the second abnormal behavior for determining whether the condition for generating the threat burst information is met; determining a first network asset weight value of the first node device based on the network location of the first node device and the service attribute corresponding to the first node device, where the first network asset weight value indicates asset importance of the first node device in a network to which the first node device belongs; obtaining a fourth threat burst parameter value of the first node device based on the second attack phase weight value, the second attack type weight value, and the first network asset weight value; and when the fourth threat burst parameter value is less than or equal to a preset third burst threshold, determining that the condition for generating the threat burst information is not met.

Optionally, after reading the program code 210 stored in the memory 203, the processor 201 further performs the following operation: determining, based on the threat burst information, a node device that executes the handling measure, and triggering the node device that executes the handling measure to execute the handling measure.

Optionally, after reading the program code 210 stored in the memory 203, the processor 201 further performs the following operations: determining a first network asset weight value of the first node device based on the network location of the first node device and the service attribute corresponding to the first node device, where the first network asset weight value indicates asset importance of the first node device in a network to which the first node device belongs; obtaining attack duration information of the second abnormal event; determining, based on a preset node selection table, a candidate node device set corresponding to a combination of the first network asset weight value and the attack duration information of the second abnormal event, where the node selection table includes a correspondence among a network asset weight value, attack duration information, and a candidate node device; and selecting, from the candidate node device set, a candidate node device as the node device that executes the handling measure, where the selected candidate node device is a candidate node device that is in the candidate node device set and that has a shortest topological distance from the first node device.

Optionally, after reading the program code 210 stored in the memory 203, the processor 201 further performs the following operation: when the node device that executes the handling measure is the first node device, executing the handling measure for the second abnormal event based on the threat burst information.

Optionally, after reading the program code 210 stored in the memory 203, the processor 201 further performs the following operations: when the second abnormal event is a malicious connection, blocking the connection; and/or, when the second abnormal event is a malicious process, clearing the process; and/or, when the second abnormal event is a malicious permission, modifying the permission; and/or, when the second abnormal event is tampering with a file, repairing the file; and/or, when the second abnormal event is an exception of a memory, performing software and hardware resetting on the memory.

For more details about implementing the foregoing functions by the processor 201, the network interface 204, the memory 203, and the like, refer to descriptions in the following method embodiments.

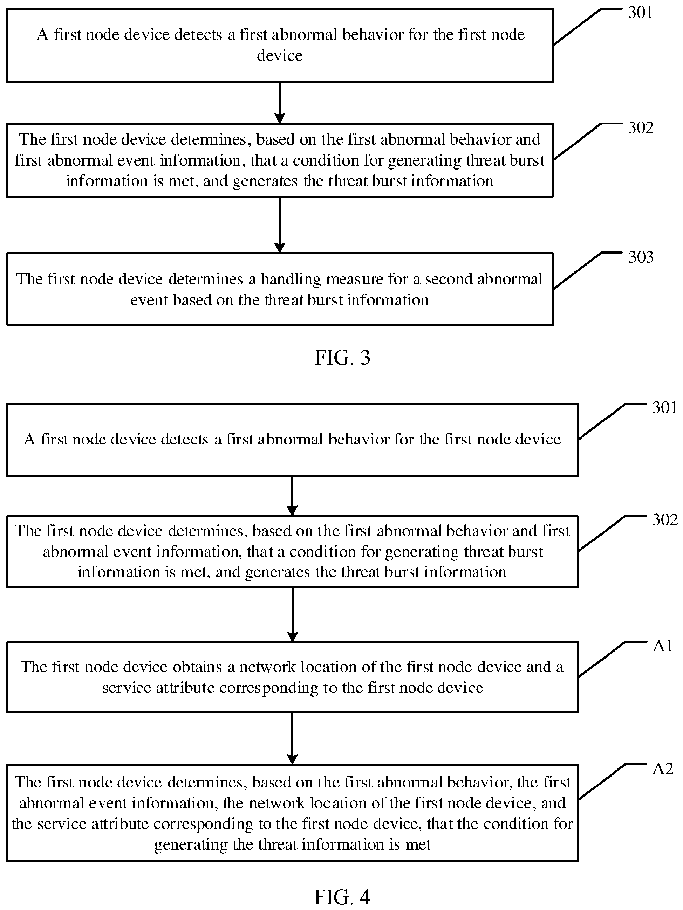

The following describes, with reference to FIG. 3, a network threat processing method according to an embodiment of this application. The method shown in FIG. 3 includes step 301 to step 303.

Optionally, a network deployment scenario of a network threat processing system in the method is shown in FIG. 1a.

Optionally, hardware of a first node device in the method has a structure shown in FIG. 2.

As shown in FIG. 3, the following describes in detail the network threat processing method provided in this embodiment of this application. The method mainly includes the following steps 301 to 303.

301: The first node device detects a first abnormal behavior on the first node device.

The first node device detects, in a network, the first abnormal behavior on the first node device. A destination of the first abnormal behavior is the first node device. For example, the first abnormal behavior is an abnormal scanning behavior.

When the first node device detects the first abnormal behavior, subsequent step 302 is triggered to be performed.

302: The first node device determines, based on the first abnormal behavior and first abnormal event information, that a condition for generating threat burst information is met, and generates the threat burst information.

The network to which the first node device belongs includes a plurality of node devices. For example, the network includes the first node device and a second node device. The second node device sends the first abnormal event information to the first node device before the first node device detects the first abnormal behavior.

The first abnormal event information is generated by the second node device and sent to the first node device. The first abnormal event information is used to describe an abnormal behavior detected by the second node device. For example, the first abnormal event information includes attribute description information of a first abnormal event, an attack phase of the first abnormal event, and an attack type of the first abnormal event. The attribute description information of the first abnormal event is used to describe an attribute of the first abnormal event. For example, the attribute description information of the first abnormal event describes the following: The first abnormal event is a scanning event.

In this embodiment of this application, each abnormal event has a corresponding attack phase and attack type. The attack phase is a phase in which an abnormal event attacks a network. For example, the attack phase includes a penetration phase (for example, the penetration phase includes scanning and vulnerability exploitation), Trojan horse implantation, control, penetration diffusion, elevation of privilege, and theft (or theft is also referred to as destruction). The attack type is a type corresponding to an attack means of an abnormal event in a network. For example, the attack type includes scanning, brute force cracking, and elevation of privilege. The attack phase and the attack type complement each other. For example, the attack phase of the first abnormal event is a phase in which the first abnormal event attacks the network, and the attack type of the first abnormal event is a type corresponding to an attack means of the first abnormal event in the network.

Optionally, in this embodiment of this application, it is pre-specified whether the condition for generating the threat burst information is met. Whether the condition for generating the threat burst information is met is determined by the node device based on the detected abnormal behavior and the abnormal event information that is pre-stored by the node device. Whether the condition for generating the threat burst information is met is used by the node device to determine whether to perform threat burst. For example, if the condition for generating the threat burst information is met, the node device determines to perform threat burst; or if the condition for generating the threat burst information is not met, the node device determines not to perform threat burst.

Optionally, when the first node device determines to perform threat burst, the first node device generates the threat burst information. The threat burst information includes attribute description information of a second abnormal event and threat degree information corresponding to the second abnormal event. The second abnormal event is generated through association based on the first abnormal event and the first abnormal behavior. Herein, generation through association means that both the first abnormal event and the first abnormal behavior need to be used to generate the second abnormal event. The second abnormal event is a result generated by the first node device jointly based on the currently detected first abnormal behavior and the first abnormal event that is pre-stored by the first node device. That is, the threat burst information carries the attribute description information of the second abnormal event. In addition, the threat degree information corresponding to the second abnormal event is a threat degree generated by the second abnormal event, and the threat degree information is used to determine a measure for handling the second abnormal event.

In this embodiment of this application, both the first node device and the second node device are node devices in the network. The first node device stores the first abnormal event information pre-sent by the second node device. The first abnormal event carries abnormal information recorded in a process in which an abnormal behavior is propagated in the network. When detecting the first abnormal behavior, the first node device can determine, based on the first abnormal behavior and the first abnormal event information, to perform threat burst, and generate the threat burst information. Therefore, the node device in the network can determine whether to perform the threat burst, and can detect an abnormal behavior without centralized traffic reporting, to reduce consumption of network bandwidth resources, storage resources, and processing resources, thereby saving network traffic, storage resources, and processing resources. In addition, the first node device and the second node device are located in a real network environment. Therefore, in this embodiment of this application, abnormal event detection can be performed based on the real network environment, and this embodiment has a feature of strong real-time performance.

Optionally, as shown in FIG. 4, step 302 in which the first node device determines, based on the first abnormal behavior and the first abnormal event information, that the condition for generating the threat burst information is met includes the following steps A1 and A2.

A1: The first node device obtains a network location of the first node device and a service attribute corresponding to the first node device.

Step 302 describes whether the foregoing condition is met is related to the first abnormal behavior and the first abnormal event. Further, whether the condition for generating the threat burst information is met is further related to an attribute of the first node device and a network in which the first node device is located. For example, the first node device obtains the network location of the first node device and the service attribute corresponding to the first node device. The network location of the first node device is a location corresponding to the first node device in the network, and the service attribute corresponding to the first node device is a service of a specific attribute provided by the first node device in the network.

For example, a network location of a node device includes: a business support system (business support system, B) domain, a management support system (management support system, M) domain, an operation support system (operation support system, O) domain, an operation support system (operation support systems, OSS) management plane, an O domain OSS operation and maintenance plane, and an O domain network element. An operation support system is a necessary support platform for development and operation of telecommunication services. The O domain is a data domain of the operation support system (operation support system), the B domain is a data domain of a business support system (business support system), and the M domain is a data domain of a management support system (management support system). For example, the B domain includes user data and service data, such as user consumption habits, terminal information, average revenue per user (average revenue per user, ARPU) groups, service content, and service audiences. The O domain includes network data, such as signaling, alarms, faults, and network resources. The M domain includes location information, such as people flow tracks and map information. Data analysis and mining in three domains are big data application in the telecommunication industry. For example, the big data application includes geographic precision marketing and cost actuarial calculation.

The following describes a service attribute corresponding to a node device by using an example. The service attribute corresponding to the node device includes at least one of the following: a border server, a jump host, a service network element, and a network management virtual machine (virtual machine, VM).

A2: The first node device determines, based on the first abnormal behavior, the first abnormal event information, the network location of the first node device, and the service attribute corresponding to the first node device, that the condition for generating the threat burst information is met.

It can be learned from the foregoing step 302 that the first node device obtains the first abnormal behavior and the first abnormal event information. It can be learned from the foregoing step A2 that the first node device obtains the network location of the first node device and the service attribute corresponding to the first node device. Then, the first node device determines, jointly by using the foregoing four types of information, that the condition for generating the threat burst information is met. In this embodiment of this application, when detecting the first abnormal behavior, the first node device can determine, based on the first abnormal behavior, the first abnormal event information, the network location of the first node device, and the service attribute of the first node device, that threat burst occurs, and generate the threat burst information. Therefore, the node device in the network can determine whether to perform the threat burst, and can detect an abnormal behavior without centralized traffic reporting, to reduce consumption of network bandwidth resources, storage resources, and processing resources, thereby saving network traffic, storage resources, and processing resources. In addition, the first node device and the second node device are located in a real network environment. Therefore, in this embodiment of this application, abnormal event detection can be performed based on the real network environment, and this embodiment has a feature of strong real-time performance. Further, the first node device further determines, with reference to the network location of the first node device and the service attribute corresponding to the first node device, that the condition for generating the threat burst information is met. The network location and the service attribute of the first node device are used to determine whether to perform the threat burst. Compared with determining, by using the first abnormal behavior and the first abnormal event information, whether to perform the threat burst, more accurate detection of the abnormal event can be implemented.

Optionally, the first abnormal event information is sent by the second node device according to a diffusion protocol.

The second node device sends the first abnormal event information in the network based on the diffusion protocol, and another node device (for example, the first node device) in the network receives the first abnormal event information sent by the second node device based on the diffusion protocol. For example, the second node device randomly selects, according to the diffusion protocol, four node devices from the network to which the second node device belongs, where the four node devices include the first node device. In this case, the first node device receives the first abnormal event information and stores the received first abnormal event information.

Optionally, step 302 in which the first node device determines, based on the first abnormal behavior and the first abnormal event information, that the condition for generating the threat burst information is met includes step B1 to step B5.

B1: The first node device determines an attack phase of the first abnormal behavior and an attack type of the first abnormal behavior based on the first abnormal behavior and the first abnormal event information.

It can be learned from the foregoing step 302 that the first node device obtains the first abnormal behavior and the first abnormal event information. The first node device can determine the attack phase of the first abnormal behavior by analyzing the first abnormal behavior and the first abnormal event information. In addition, the first node device determines the attack type of the first abnormal behavior by analyzing the first abnormal behavior and the first abnormal event information. For descriptions of the attack phase and the attack type, refer to the foregoing examples. Details are not described herein again.

In this embodiment of this application, the first node device obtains a threat burst parameter value based on the first abnormal behavior and the first abnormal event information, and then compares the threat burst parameter value with a preset burst threshold, to determine whether to perform threat burst. For example, the first node device obtains a plurality of weight values, and calculates the threat burst parameter value by using the plurality of weight values. In subsequent steps B2 to B4, two weight values are designed, respectively: a first attack phase weight value and a first attack type weight value. A value of each weight value is determined based on an example of a specific application scenario, and is not limited herein.

B2: The first node device determines the first attack phase weight value of the first abnormal behavior based on the attack phase of the first abnormal behavior, where the first attack phase weight value indicates importance of the attack phase of the first abnormal behavior for determining whether the condition for generating the threat burst information is met.

B3: The first node device determines a first attack type weight value of the first abnormal behavior based on the attack type of the first abnormal behavior, where the first attack type weight value indicates importance of the attack type of the first abnormal behavior for determining whether the condition for generating the threat burst information is met.

It should be noted that there is no time sequence or logical sequence between the foregoing steps B2 and B3.

In different subsequent application scenarios, the threat burst parameter value of the first node device is expressed in different manners, for example, step B4.

B4: The first node device obtains a first threat burst parameter value of the first node device based on the first attack phase weight value and the first attack type weight value.

For example, the first node device calculates a value based on the first attack phase weight value, the first attack type weight value, and a preset calculation rule, and the calculated value is used as the first threat burst parameter value of the first node device. For example, the calculation rule is that the first attack phase weight value and the first attack type weight value are directly added, or the calculation rule is that after the first attack phase weight value and the first attack type weight value are added, a result obtained by addition is multiplied by an adjustment factor, and an obtained calculation result is used as the first threat burst parameter value of the first node device. Optionally, the adjustment factor is preconfigured.

B5: When the first threat burst parameter value is greater than a preset first burst threshold, the first node device determines that the condition for generating the threat burst information is met.

After obtaining the first threat burst parameter value, the first node device compares the first threat burst parameter value with the first burst threshold, and determines, based on a comparison result, whether the condition for generating the threat burst information is met. For example, if a larger threat burst parameter value indicates a higher risk of a threat, when the first threat burst parameter value is greater than the preset first burst threshold, the first node device determines that the condition for generating the threat burst information is met.

Optionally, in step B4, the first threat burst parameter value is obtained in the following manner:

$$M1=S*K,$$

where M1 represents the first threat burst parameter value, S represents the first attack phase weight value, K represents the first attack type weight value, and * represents a multiplication operation.

In the foregoing calculation formula, the first attack phase weight value and the first attack type weight value are jointly used to determine the first threat burst parameter value of the first node device. For example, a result of multiplying the first attack phase weight value by the first attack type weight value is used as the first threat burst parameter value of the first node device. The foregoing calculation manner is merely an example, and is not intended to limit this embodiment of this application. The first threat burst parameter value obtained based on the foregoing calculation formula can be used to determine whether to perform the threat burst.

Optionally, in step A2, the first node device determines, based on the first abnormal behavior, the first abnormal event information, the network location of the first node device, and the service attribute corresponding to the first node device, that the condition for generating the threat burst information is met. A specific process includes the following step A21 to step A26.

A21: The first node device determines an attack phase of the first abnormal behavior and an attack type of the first abnormal behavior based on the first abnormal behavior and the first abnormal event information.

A22: The first node device determines the first attack phase weight value of the first abnormal behavior based on the attack phase of the first abnormal behavior, where the first attack phase weight value indicates importance of the attack phase of the first abnormal behavior for determining whether the condition for generating the threat burst information is met.

A23: The first node device determines a first attack type weight value of the first abnormal behavior based on the attack type of the first abnormal behavior, where the first attack type weight value indicates importance of the attack type of the first abnormal behavior for determining whether the condition for generating the threat burst information is met.

An implementation of step A21 to step A23 herein is similar to an implementation of the foregoing step B1 to step B3. For details, refer to descriptions of the first attack phase weight value and the first attack type weight value in the foregoing steps B2 and B3.

A24: The first node device determines a first network asset weight value of the first node device based on the network location of the first node device and the service attribute corresponding to the first node device, where the first network asset weight value indicates asset importance of the first node device in a network to which the first node device belongs.

The network location of the first node device is the location corresponding to the first node device in the network, and the service attribute corresponding to the first node device is an attribute of a service provided by the first node device in the network. For details, refer to the foregoing descriptions of the network location and the service attribute.

Optionally, the network location and the service attribute of the node device can be used to measure asset importance of the node device in the network. For example, the first node device determines the first network asset weight value of the first node device based on the network location of the first node device and the service attribute corresponding to the first node device. The first network asset weight value of the first node device can be determined based on the network location of the first node device and the service attribute corresponding to the first node device. For example, an addition operation is performed on the network location and the service attribute of the node device, and a result obtained by the addition operation is used as the network asset weight value. The following is not limited: An addition operation is performed on the network location and the service attribute of the node device, a result obtained by the addition operation is then multiplied by a preset adjustment factor, and an obtained result is used as the network asset weight value. In this embodiment of this application, a manner of obtaining the network asset weight value is not limited.

In different subsequent application scenarios, the threat burst parameter value of the first node device is expressed in different manners, for example, step A25.

A25: The first node device obtains a second threat burst parameter value of the first node device based on the first attack phase weight value, the first attack type weight value, and the first network asset weight value.

For example, the first node device calculates a value based on the first attack phase weight value, the first attack type weight value, the first network asset weight value, and a preset calculation rule, and the calculated value is used as the second threat burst parameter value of the first node device. For example, the calculation rule is that the first attack phase weight value, the first attack type weight value, and the first network asset weight value are directly added, or the calculation rule is that a result obtained by performing an addition operation on the first attack phase weight value, the first attack type weight value, and the first network asset weight value is multiplied by an adjustment factor, and an obtained result is used as the second threat burst parameter value. The adjustment factor is preconfigured.

A26: When the second threat burst parameter value is greater than a preset second burst threshold, the first node device determines that the condition for generating the threat burst information is met.

After obtaining the second threat burst parameter value, the first node device compares the second threat burst parameter value with the second burst threshold, and determines, based on a comparison result, whether the condition for generating the threat burst information is met. For example, if a larger threat burst parameter value indicates a higher risk of a threat, when the second threat burst parameter value is greater than the preset second burst threshold, the first node device determines that the condition for generating the threat burst information is met.

Optionally, in step A25, the first node device obtains the second threat burst parameter value in the following manner:

$$M2 = A * S * K,$$

where
M2 represents the second threat burst parameter value, A represents the first network asset weight value, S represents the first attack phase weight value, K represents the first attack type weight value, and * represents a multiplication operation.

The foregoing calculation manner is merely an example, and is not intended to limit this embodiment of this application. The second threat burst parameter value obtained based on the foregoing calculation formula can be used to determine whether the threat burst occurs.

Optionally, step A25 in which the first node device obtains the second threat burst parameter value of the first node device based on the first attack phase weight value, the first attack type weight value, and the first network asset weight value includes step A251 to step A252.

A251: The first node device determines attack duration information of the first abnormal behavior and attack path depth information of the first abnormal behavior based on the first abnormal behavior and the attribute description information of the first abnormal event.

The attack duration information of the first abnormal event is a time length of an attack performed by the first abnormal event in the network. For example, the attack duration of the first abnormal event is three days, or the attack duration of the first abnormal event is two hours. A value of the attack duration information is specifically determined with reference to an application scenario.

That the attack duration information of the first abnormal event can be obtained by using the first abnormal behavior and the attribute description information of the first abnormal event is not limited.

A252: The first node device obtains the second threat burst parameter value based on the first attack phase weight value, the first attack type weight value, the first network asset weight value, the attack duration information of the first abnormal behavior, and the attack path depth information of the first abnormal behavior.

The first attack phase weight value, the first attack type weight value, the first network asset weight value, the attack duration information of the first abnormal behavior, and the attack path depth information of the first abnormal behavior are a plurality of weight values obtained by the first node device, and the second threat burst parameter value is calculated by using the plurality of weight values. **In** this embodiment of this application, a manner of calculating the second threat burst parameter value based on the plurality of weight values is not limited.

Optionally, in step A252, the first node device obtains the second threat burst parameter value in the following manner:

$$M2=N*A*S*K*T,$$

where

M2 represents the second threat burst parameter value, N represents the attack path depth information of the first abnormal behavior, A represents the first network asset weight value, S represents the first attack phase weight value, K represents the first attack type weight value, T represents the attack duration information of the first abnormal behavior, and * represents a multiplication operation.

The foregoing calculation manner is merely an example, and is not intended to limit this embodiment of this application. The second threat burst parameter value obtained based on the foregoing calculation formula can be used to determine whether the threat burst occurs.

303: The first node device determines a handling measure for the second abnormal event based on the threat burst information.

The first node device generates the threat burst information, and the first node device analyzes the second abnormal event based on the threat burst information, to determine the handling measure for the second abnormal event. For example, the handling measure for the second abnormal event is a measure used for handling the second abnormal event. In this embodiment of this application, a detailed solution of the handling measure needs to be determined with reference to an application scenario. For details, refer to an example in a subsequent embodiment for description.

Optionally, step 303 in which the first node device determines the handling measure for the second abnormal event based on the threat burst information includes:

The first node device determines, based on the threat burst information, a node device that executes the handling measure, and triggers the node device that executes the handling measure to execute the handling measure.

After generating the threat burst information, the first node device selects, from the network to which the first node device belongs by using the threat burst information, the node device that executes the handling measure. For example, the node device that executes the handling measure is a trap node selected by the first node device, and the handling measure for the second abnormal event is executed on the trap node, so as to eliminate a threat in the network.

The following is not limited: In this embodiment of this application, the first node device selects the first node device itself as the node device that executes the handling measure, or the first node device selects another node device in the network to which the first node device belongs as the node device that executes the handling measure. For example, the first node device selects, according to a preset node device selection rule, the node device that executes the handling measure.

Optionally, that the first node device determines, based on the threat burst information, a node device that executes the handling measure includes the following steps C1 to C4.

C1: The first node device determines a first network asset weight value of the first node device based on the network location of the first node device and the service attribute corresponding to the first node device, where the first network asset weight value indicates asset importance of the first node device in a network to which the first node device belongs.

The network location of the first node device is the location corresponding to the first node device in the network, and the service attribute corresponding to the first node device is an attribute of a service provided by the first node device in the network. For details, refer to the foregoing descriptions of the network location and the service attribute. The network location and the service attribute of the node device are used to measure asset importance of the node device in the network. For example, the first node device determines the first network asset weight value of the first node device based on the network location of the first node device and the service attribute corresponding to the first node device. For example, an addition operation is performed on the network location and the service attribute of the node device, and a result obtained by addition is used as the network asset weight value. The following is not limited: After a result obtained by adding the network location and the service attribute of the node device is multiplied by a preset adjustment factor, an obtained result may also be used as the network asset weight value. In this embodiment of this application, a manner of obtaining the network asset weight value is not limited.

C2: The first node device obtains attack duration information of the second abnormal event.

The attack duration information of the second abnormal event is a time length of an attack performed by the second abnormal event in the network. For example, the attack duration of the second abnormal event is three days, or the attack duration of the second abnormal event is two hours. A value of the attack duration information is specifically determined with reference to an application scenario.

That the attack duration information of the second abnormal event can be obtained by using the attribute description information of the second abnormal event is not limited.

C3: The first node device determines, based on a preset node selection table, a candidate node device set corresponding to a combination of the first network asset weight value and the attack duration information of the second abnormal event, where the node selection table includes a correspondence among a network asset weight value, attack duration information, and a candidate node device.

The first node device presets a node selection table, and the node selection table includes a correspondence among a network asset weight value, attack duration information, and a candidate node device. After obtaining the first network asset weight value and the attack duration information of the second abnormal event, the first node device queries the node selection table by using a combination of the first network asset weight value and the attack duration information of the second abnormal event, and obtains a candidate node device set by querying the table, where the candidate node device set includes one or more candidate node devices.

C4: The first node device selects, from the candidate node device set, a candidate node device as the node device that executes the handling measure, where the selected candidate node device is a candidate node device that is in the candidate node device set and that has a shortest topological distance from the first node device.

Optionally, after obtaining the candidate node device set, the first node device selects, from the candidate node device set according to a shortest topological distance principle, a candidate node device as the node device that executes the handling measure. That is, the selected candidate node device is a candidate node device that is in the candidate node device set and that has a shortest topological distance from the first node device. For example, the selected candidate node device is the first node device shown in FIG. 1a or the fourth node device shown in FIG. 1c.

Optionally, when the node device that executes the handling measure is the first node device, the method provided in this embodiment of this application further includes: The first node device executes the handling measure for the second abnormal event based on the threat burst information.

The first node device analyzes, based on the threat burst information, the second abnormal event included in the threat burst information, so as to determine the handling measure for the second abnormal event. If it is determined that the first node device executes the handling measure, the first node device executes the handling measure for the second abnormal event based on the threat burst information. In this embodiment of this application, a specific manner of the handling measure needs to be combined with an application scenario. In this embodiment of this application, the first node device executes the handling measure for the second abnormal event, so that a threat can be found in the network, and the abnormal event can be handled, so that the network can run normally.

Optionally, that the first node device executes the handling measure for the second abnormal event based on the threat burst information includes:

When the second abnormal event is a malicious connection, the first node device blocks the connection; and/or
when the second abnormal event is a malicious process, the first node device clears the process; and/or
when the second abnormal event is a malicious permission, the first node device modifies the permission; and/or
when the second abnormal event is tampering with a file, the first node device repairs the file; and/or
when the second abnormal event is an exception of a memory, the first node device performs software and hardware resetting on the memory.

An attribute of the second abnormal event is implemented in a plurality of manners. In an implementation, when the second abnormal event is a malicious connection, the first node device blocks the connection. Therefore, automatic blocking of the malicious connection is implemented in the network.

In another implementation, when the second abnormal event is a malicious process, the first node device clears the process. Therefore, automatic clearing of the malicious process is implemented in the network.

In another implementation, when the second abnormal event is malicious permission, the first node device modifies the permission. Therefore, automatic control of the malicious permission is implemented in the network.

In another implementation, when the second abnormal event is tampering with a file, the first node device repairs the file. Therefore, automatic repair of the tampered file is implemented in the network.

In another implementation, when the second abnormal event is an exception of a memory, the first node device performs software and hardware resetting on the memory. Therefore, automatic resetting of the memory is implemented in the network.

It can be learned based on the foregoing embodiment that, the first node device communicates with the second node device, and the first node device can receive the first abnormal event information from the second node device. Then, the first node device detects the first abnormal behavior. The first node device determines, based on the detected first abnormal behavior and the first abnormal event information, that the condition for generating the threat burst information is met, and generates the threat burst information. The first node device further determines the handling measure for the second abnormal event based on the threat burst information, so that the first node device can detect an abnormal event, and the first node device further determines the handling measure for the abnormal event. Therefore, in this embodiment of this application, the node device in a network can detect the abnormal event without reporting a log, so that consumption of network bandwidth resources, storage resources, and processing resources is reduced, and network traffic, storage resources, and processing resources are saved.

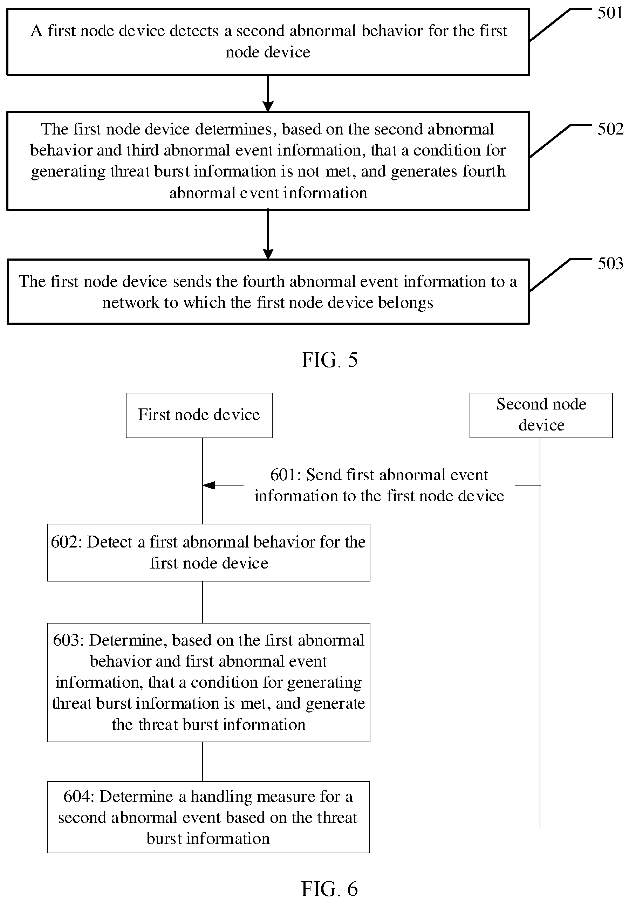

The following describes, with reference to FIG. 5, a network threat processing method according to an embodiment of this application. The method shown in FIG. 5 includes step 501 to step 503. The method shown in FIG. 5 is independent of the method shown in FIG. 3, or the method shown in FIG. 5 is combined with the method shown in FIG. 3.

Optionally, a network deployment scenario of a network threat analysis system in the method is shown in FIG. 1b.

Optionally, a first node device in the method shown in FIG. 5 is specifically of the structure shown in FIG. 2.

501: The first node device detects a second abnormal behavior on the first node device.

The second abnormal behavior is an abnormal behavior that is for the first node device and that is detected by the first node device, and the second abnormal behavior is different from the foregoing first abnormal behavior.

502: The first node device determines, based on the second abnormal behavior and third abnormal event information, that the condition for generating the threat burst information is not met, and generates fourth abnormal event information.

The third abnormal event information is sent by a third node device before the first node device detects the second abnormal behavior. The third abnormal event information includes attribute description information of a third abnormal event, an attack phase of the third abnormal event, and an attack type of the third abnormal event. A fourth abnormal event is generated through association based on the third abnormal event and the second abnormal behavior.

A difference between step 502 and the foregoing step 302 lies in that, in step 502, it is determined that the condition for generating the threat burst information is not met, but in step 302, it is determined that the condition for generating the threat burst information is met. In addition, the first node device generates different information when the condition for generating the threat burst information is met (for example, step 302 in FIG. 3) or when the condition for generating the threat burst information is not met (for example, step 502 in FIG. 5). For example, in step 502, because the first node device does not perform threat burst, the first node device generates the fourth abnormal event information. A fourth abnormal event is generated through association based on the third abnormal event and the second abnormal behavior. The fourth abnormal event information carries an association result of the third abnormal event and the second abnormal behavior. To be specific, the fourth abnormal event information carries abnormal information generated in a process in which the abnormal behavior is propagated in the network.

Optionally, step 502 in which the first node device determines, based on the second abnormal behavior and the third abnormal event information, that the condition for generating the threat burst information is not met includes step D1 and step D2.

D1: The first node device obtains a network location of the first node device and a service attribute corresponding to the first node device.

Step D1 is similar to step A1 in the foregoing embodiment, and details are not described herein again.

D2: The first node device determines, based on the second abnormal behavior, the third abnormal event information, the network location of the first node device, and the service attribute corresponding to the first node device, that the condition for generating the threat burst information is not met.

Step D2 is similar to step A2 in the foregoing embodiment, and a difference lies in that, in step D2, it needs to be determined that the condition for generating the threat burst information is not met, and in step A2 in the foregoing embodiment, it needs to be determined that the condition for generating the threat burst information is met.

Optionally, step 502 in which the first node device determines, based on the second abnormal behavior and the third abnormal event information, that the condition for generating the threat burst information is not met includes step E1 to step E5.

E1: The first node device determines an attack phase of the second abnormal behavior and an attack type of the second abnormal behavior based on the second abnormal behavior and the third abnormal event information.

E2: The first node device determines a second attack phase weight value of the second abnormal behavior based on the attack phase of the second abnormal behavior, where the second attack phase weight value indicates importance of the attack phase of the second abnormal behavior for determining whether the condition for generating the threat burst information is met.

E3: The first node device determines a second attack type weight value of the second abnormal behavior based on the attack type of the second abnormal behavior, where the second attack type weight value indicates importance of the attack type of the second abnormal behavior for determining whether the condition for generating the threat burst information is met.

E4: The first node device obtains a third threat burst parameter value of the first node device based on the second attack phase weight value and the second attack type weight value.

E5: When the third threat burst parameter value is less than or equal to a preset third burst threshold, the first node device determines that the condition for generating the threat burst information is not met.

Steps E1 to E5 are similar to steps B1 to B5 in the foregoing embodiment. A difference lies in that the threat burst parameter value in step E5 is less than or equal to the preset burst threshold, and the threat burst parameter value in step B5 in the foregoing embodiment is greater than the preset burst threshold.

Optionally, step 502 in which the first node device determines, based on the second abnormal behavior and the third abnormal event information, that the condition for generating the threat burst information is not met includes step F1 to step F6.

F1: The first node device determines an attack phase of the second abnormal behavior and an attack type of the second abnormal behavior based on the second abnormal behavior and second abnormal event information.

F2: The first node device determines a second attack phase weight value of the second abnormal behavior based on the attack phase of the second abnormal behavior, where the second attack phase weight value indicates importance of the attack phase of the second abnormal behavior for determining whether the condition for generating the threat burst information is met.

F3: The first node device determines a second attack type weight value of the second abnormal behavior based on the attack type of the second abnormal behavior, where the second attack type weight value indicates importance of the attack type of the second abnormal behavior for determining whether the condition for generating the threat burst information is met.

F4: The first node device determines a first network asset weight value of the first node device based on the network location of the first node device and the service attribute corresponding to the first node device, where the first network asset weight value indicates asset importance of the first node device in a network to which the first node device belongs.

F5: The first node device obtains a fourth threat burst parameter value of the first node device based on the second attack phase weight value, the second attack type weight value, and the first network asset weight value.

F6: When the fourth threat burst parameter value is less than or equal to a preset third burst threshold, the first node device determines that the condition for generating the threat burst information is not met.

Steps F1 to F6 are similar to steps A21 to A26 in the foregoing embodiment. A difference lies in that the threat burst parameter value in step F6 is less than or equal to the preset burst threshold, and the threat burst parameter value in step A26 in the foregoing embodiment is greater than the preset burst threshold.

503: The first node device sends the fourth abnormal event information to a network to which the first node device belongs.

When the first node device does not perform threat burst, the first node device sends the fourth abnormal event information in the network according to a diffusion protocol, so that a node device that receives the fourth abnormal event information determines whether to perform the threat burst.

It can be learned based on the foregoing embodiment that, the first node device can detect the abnormal event, and the first node device sends the abnormal event information to the network before the condition for generating the threat burst information is met, so that the abnormal event information is diffused in a timely manner. In this way, another node device that receives the fourth abnormal event information determines whether to perform the threat burst. Therefore, in this embodiment of this application, the node device in the network can detect the abnormal event without reporting a log, to reduce consumption of network bandwidth resources, storage resources, and processing resources, thereby saving network traffic, storage resources, and processing resources.

FIG. 6 is a schematic flowchart of interaction between a first node device and a second node device according to an embodiment of this application. The interaction mainly includes step 601 to step 604.

601: The second node device sends first abnormal event information to the first node device, where the first abnormal event information includes attribute description information of a first abnormal event, an attack phase of the first abnormal event, and an attack type of the first abnormal event.

602: The first node device detects a first abnormal behavior on the first node device.

603: The first node device determines, based on the first abnormal behavior and first abnormal event information, that a condition for generating threat burst information is met, and generates the threat burst information.

The threat burst information includes attribute description information of a second abnormal event and threat degree information corresponding to the second abnormal event. The second abnormal event is generated through association based on the first abnormal event and the first abnormal behavior.

604: The first node device determines a handling measure for the second abnormal event based on the threat burst information.

Step 602 to step 604 are similar to step 301 to step 303 shown in FIG. 3. Refer to step 301 to step 303 shown in FIG. 3. Details are not described herein again.

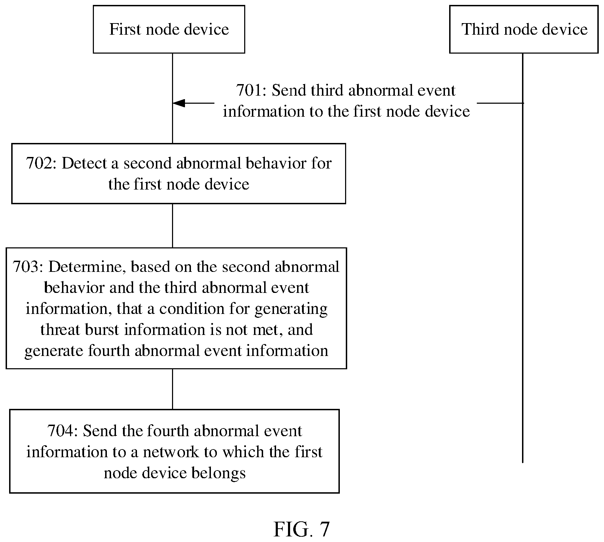

FIG. 7 is a schematic flowchart of interaction between a first node device and a second node device according to an embodiment of this application. The interaction mainly includes step 701 to step 704.

701: A third node device sends third abnormal event information to the first node device, where the third abnormal event information includes attribute description information of a third abnormal event, an attack phase of the third abnormal event, and an attack type of the third abnormal event.

702: The first node device detects a second abnormal behavior on the first node device.

703: The first node device determines, based on the second abnormal behavior and third abnormal event information, that the condition for generating the threat burst information is not met, and generates fourth abnormal event information.

A fourth abnormal event is generated through association based on the third abnormal event and the second abnormal behavior.

704: The first node device sends the fourth abnormal event information to a network to which the first node device belongs.

Step 702 to step 704 are similar to step 501 to step 503 shown in FIG. 5. Refer to step 501 to step 503 shown in FIG. 5. Details are not described herein again.

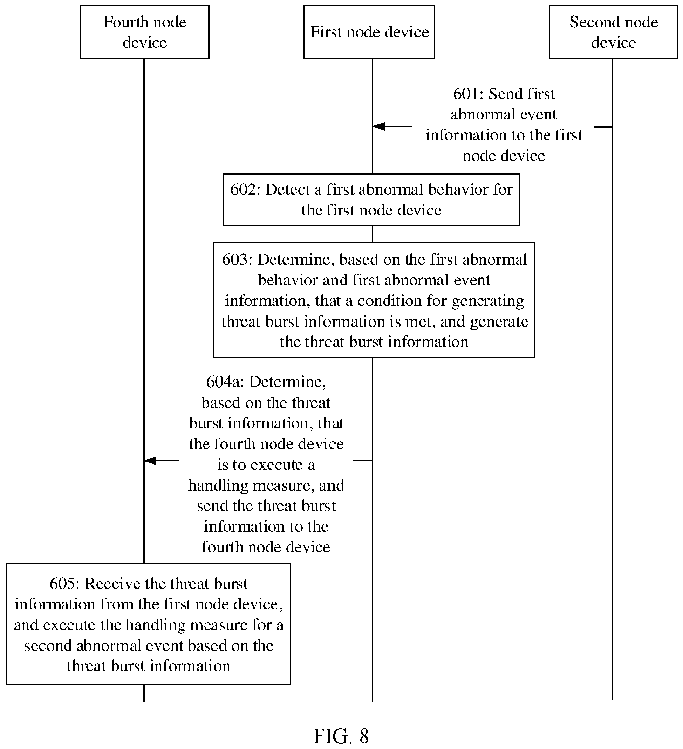

FIG. 8 is a schematic flowchart of interaction between a first node device and a second node device according to an embodiment of this application. The interaction mainly includes step 601 to step 605.

601: The second node device sends first abnormal event information to the first node device.

The first abnormal event information includes attribute description information of a first abnormal event, an attack phase of the first abnormal event, and an attack type of the first abnormal event.

602: The first node device detects a first abnormal behavior on the first node device.

603: The first node device determines, based on the first abnormal behavior and first abnormal event information, that a condition for generating threat burst information is met, and generates the threat burst information.

The threat burst information includes attribute description information of a second abnormal event and threat degree information corresponding to the second abnormal event. The second abnormal event is generated through association based on the first abnormal event and the first abnormal behavior.

Step 602 and step 603 are similar to step 301 to step 303 shown in FIG. 3. Refer to step 301 and step 302 shown in FIG. 3. Details are not described herein again.

604a: The first node device determines, based on the threat burst information, that a fourth node device is to execute a handling measure, and sends the threat burst information to the fourth node device.

605: The fourth node device receives the threat burst information from the first node device, and executes the handling measure for the second abnormal event based on the threat burst information.

After performing threat burst, the first node device generates the threat burst information, and the first node device analyzes the second abnormal event based on the threat burst information, to determine the handling measure for the second abnormal event. The first node device determines that the fourth node device is to perform the handling measure. For example, the handling measure for the second abnormal event is a measure used for handling the second abnormal event. In this embodiment of this application, a detailed solution of the handling measure needs to be determined with reference to an application scenario. For details, refer to an example in a subsequent embodiment for description.

Optionally, step 605 in which the fourth node device executes the handling measure for the second abnormal event based on the threat burst information includes:

When the second abnormal event is a malicious connection, the fourth node device blocks the connection; and/or

when the second abnormal event is a malicious process, the fourth node device clears the process; and/or

when the second abnormal event is a malicious permission, the fourth node device modifies the permission; and/or

when the second abnormal event is tampering with a file, the fourth node device repairs the file; and/or

when the second abnormal event is an exception of a memory, the fourth node device performs software and hardware resetting on the memory.

An attribute of the second abnormal event is implemented in a plurality of manners. In an implementation, when the second abnormal event is a malicious connection, the fourth node device blocks the connection. Therefore, automatic blocking of the malicious connection is implemented in the network.

In another implementation, when the second abnormal event is a malicious process, the fourth node device clears the process. Therefore, automatic clearing of the malicious process is implemented in the network.

In another implementation, when the second abnormal event is malicious permission, the fourth node device modifies the permission. Therefore, automatic control of the malicious permission is implemented in the network.

In another implementation, when the second abnormal event is tampering with a file, the fourth node device repairs the file. Therefore, automatic repair of the tampered file is implemented in the network.

In another implementation, when the second abnormal event is an exception of a memory, the fourth node device performs software and hardware resetting on the memory. Therefore, automatic resetting of the memory is implemented in the network.

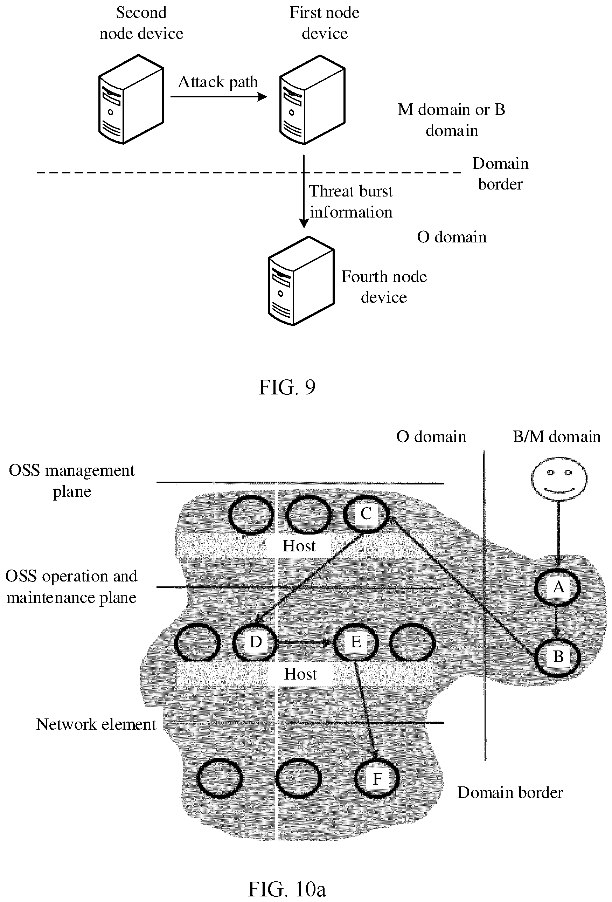

FIG. 9 is a schematic diagram of an application scenario according to an embodiment of this application. The network location of the first node device is an M domain or a B domain, the network location of the second node device is an M domain or a B domain, and the network location of the fourth node device is an O domain. The second node device generates the first abnormal event information, and sends the first abnormal event information to the first node device. In this case, an attack path exists from the second node device to the first node device, and points to the first node device from the second node device. The first node device generates the threat burst information, and sends the threat burst information to the fourth node device. The fourth node device executes the handling measure.

For better understanding and implementation of the foregoing solutions in embodiments of this application, specific descriptions are provided below by using corresponding application scenarios as examples.

FIG. 10a is a schematic diagram of an application scenario according to an embodiment of this application. A network includes nodes A, B, C, D, E, and F. The node A is located in the B domain or the M domain, and the node B is located in the B domain or the M domain. Herein, the "B" domain in the B domain has no relationship with "B" in the node B, and the two represent different meanings. For example, the node F is located in a network element, the node C, the node D, and the node E are located in a host, the node C belongs to an OSS management plane, and the node D and the node E belong to an OSS operation and maintenance plane. The nodes A, B, C, D, E and F form an attack path. The node A is a source node, and the node A generates an abnormal event.

In this embodiment of this application, a network threat processing procedure includes two phases: a distributed collaboration resilience cluster construction phase and a threat capture phase.

First, the distributed collaboration resilience cluster construction phase is described. Each network node installed with a security component constructs a distributed collaboration resilience cluster according to a protocol. The distributed collaboration resilience cluster is an asymmetric cluster. Each node has attack graph information, and each node is considered as a security neuron and has a panoramic attack graph.

In the cluster construction phase, the network nodes form a cluster mode based on network connectivity in the following manner: Each domain forms a cluster independently, or all domains form an integral cluster. This is not limited herein.

The following describes the threat capture phase.

Attacker dimension association analysis is performed by using the attack graph information and threat burst point information, threat burst information in the burst environment is generated, and a subsequent trap is disposed for capturing.

As shown in FIG. 10a, using an example in which all domains jointly form one cluster, the solution provided in this embodiment of this application mainly includes the following step (1) to step (3):

(1) Each node in the cluster defines a network asset weight value (a resource weight for short) based on a network location and a service attribute of the node.
(2) Each node in the cluster determines an abnormal event weight value (an abnormal event weight for short) based on an attack phase and an attack type of the node.

(3) A threat burst point generates the threat burst information based on the attack graph, an attack source, and an abnormal event, disposes a trap on a subsequent attack path for capturing, and repairs an entire attack chain.

Based on the foregoing overall solution, the following embodiment is described in two phases.

Phase 1:

A security component is deployed on each node (the network element or the host) in the network.

A node generates an abnormal event. For example, if a scanning event is generated, the node propagates the generated abnormal event to other surrounding nodes. Using 20 network nodes as an example, a quantity of nodes to which each node propagates the abnormal event is 4. For example, the node uses a diffusion protocol (Gossip protocol) for diffusion. For example, a scanning event occurs on the node A. Key information of the scanning event is as follows: a source address, a destination address, time, event descriptions, and the like. The abnormal event of the node A is diffused to each node according to the diffusion protocol (Gossip protocol), and is added to the attack graph.

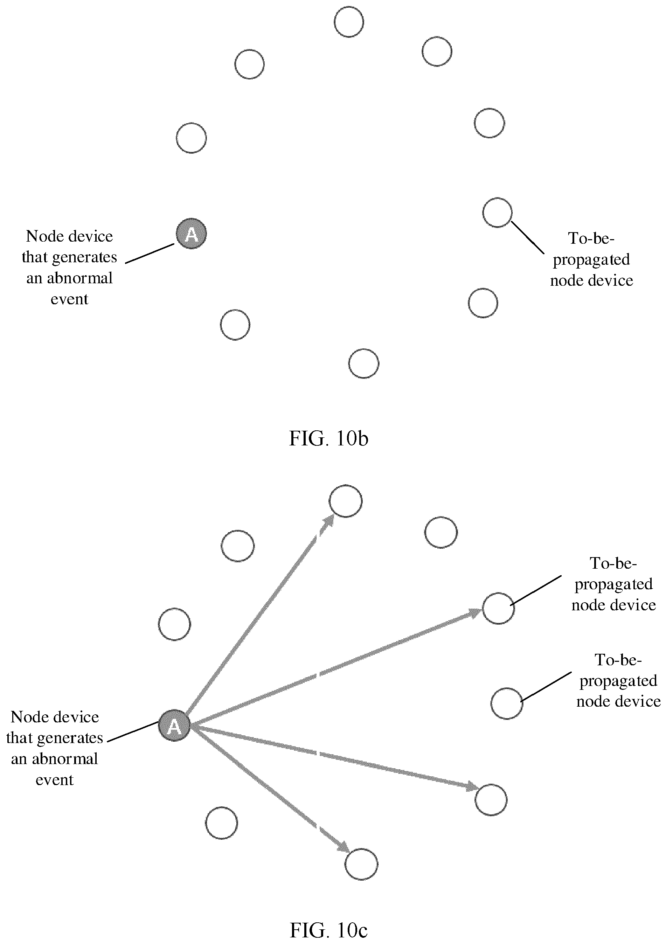

The following describes a consistency protocol principle of the attack graph. As shown in FIG. 10b, a basic idea of the Gossip protocol is that a node wants to share some information with some other nodes in the network. This node periodically selects some nodes randomly and transmits the information to these nodes. These nodes that receive the information do the same thing next, that is, transmit the information to some other randomly selected nodes. For example, the information is periodically transmitted to N target nodes. The N target nodes are referred to as fanout (fanout) nodes. The Gossip protocol is extensible. Generally, information is transmitted to all the nodes in O(logN) rounds. O(logN) is a 0 function, and represents time complexity, and N represents a quantity of nodes.

As shown in FIG. 10c, a node (for example, the node A) has been "propagated", that is, a source of threat information to be propagated subsequently. A propagation path indicates nodes that can be normally connected to the node that is initialized to be threatened, and a node that cannot be connected can only rely on a node to be propagated next to propagate a message to the node. In addition, N is equal to 4. It is assumed that four lines with arrows are paths on which the node propagates the message for the first time.

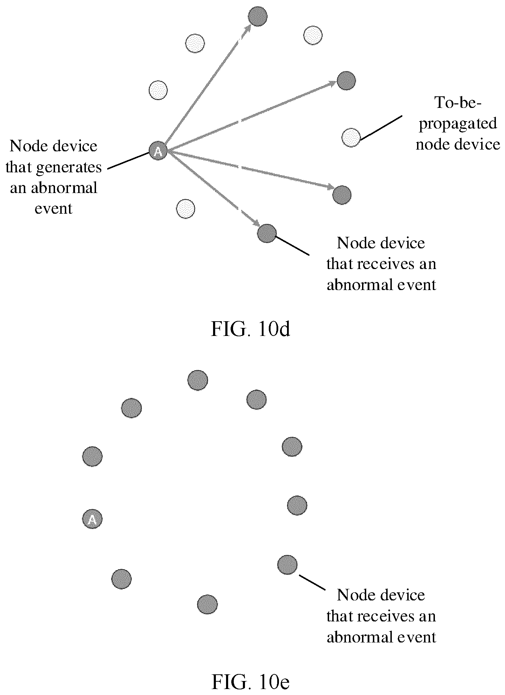

As shown in FIG. 10d, after message propagation is completed for the first time, four new nodes are "propagated", that is, the four nodes also receive the message. In this case, a total of five nodes become gray nodes, to indicate that the five nodes are "propagated".

As shown in FIG. 10e, in a next propagation period, there are five nodes in total, and each of the five nodes propagates the message to four nodes. Finally, after three cycles, all the 20 nodes are propagated (all become gray nodes), indicating that the message to be propagated has been propagated to all the nodes.

Phase 2

There are a total of two processes: 1. Determine the threat burst point based on association analysis. 2. The threat burst point performs threat burst and formulates a threat capture path, and a node at which the thread burst point is located performs threat capture.

The following first describes the threat burst point and capture principles, including the following 1 to 7.

1. Each node in the cluster defines an asset weight based on a network location and a service attribute. For example, asset weights include 5, 4, 3, 2, and 1.

Network locations: the B domain (2), the M domain (2), the O domain OSS management plane (3), the O domain OSS operation and maintenance plane (4), and the O domain network element (5). For example, the B domain (2) indicates that when the node is located in the B domain, the weight value corresponding to the network location is 2.

Service attributes: the border server (5), the jump host (3), the service network element (5), and the network management virtual machine (virtual machine, VM) (5). For example, when the service attribute is the service network element, the weight value corresponding to the service attribute is 2.

A weight of the asset weight is set to A, and A is a sum of the weight value corresponding to the network location and the weight value corresponding to the service attribute.

2. Determine the abnormal event weight based on the attack phase and the attack type.

Examples of the attack phase: the penetration phase (scanning and vulnerability exploitation); Trojan horse implantation; control; penetration diffusion; elevation of privilege; and theft/destruction.

Examples of the attack type: scanning, brute force cracking, and elevation of privilege. The attack phase and the attack type complement each other.

The weight of the attack phase is set to S, and the weight of the attack type is set to K. For example, five levels of weights are set.

Examples of the attack phase weight: the penetration phase (1); Trojan horse implantation (3); control (5); penetration diffusion (2); elevation of privilege (3); and theft/destruction (5).

Examples of the attack type weight: scanning (2), vulnerability exploitation (2), brute force cracking (3), elevation of privilege (3), and tampering (5).

3. Set a time weight to T based on the attack duration of the abnormal event.

4. The threat burst point generates threat burst information based on the abnormal event, and sets a trap on a subsequent attack path for capturing a threat and repairing the entire attack chain, including the following step (1) to step (7).

(1) Basis of the threat burst point: the threat burst parameter value is M=N*(A*S*K*T). For descriptions of N, A, S, K and T, refer to the foregoing content.
(2) Each node in the attack graph has a value M, where N represents depth information in the attack path, and burst is performed based on a burst threshold of the value M.
(3) After the threat burst point determines to perform threat burst, the threat burst information is synchronized based on the consistency principle in the phase 1.
(4) After learning the information, the nodes surrounding the burst point select the trap node based on the asset weight, a shortest path of the graph, and the attack duration of the abnormal event. In this embodiment of this application, the "trap node" is a node that executes the handling measure.
(5) Other nodes that are not used as traps perform isolation control on port data, process data, and intra-node data.
(6) The trap node determines the threat, integrates the attack path, and notifies the nodes in the attack path to perform repair.
(7) After the attack path is repaired, the attack graph is updated by using the consistency protocol.

FIG. 10a is still used as an example for description below.

1. An attacker launches a penetration attack in the B/M domain, and launches a vulnerability attack on the node A, for example, hijack the server A.
2. Discover the weak node B by performing horizontal scanning by the node A.
3. Hijack the node C in the O domain OSS management plane by launching a cross-network-segment penetration attack by the node B.
4. Further launch a penetration attack separately on the node D and the node E through a cross-plane attack.
5. A detection apparatus discovers, on the node E, the attack threat (according to the threat burst point principle).
6. The node E analyzes the threat and formulates a blocking policy, and finally the node F executes the blocking policy. The threat is finally captured and blocked (the node F is usually a firewall).
7. The attack graph is updated on each node. The foregoing propagation algorithm is used for update.

Examples of the foregoing threat burst point and capture principles are as follows.

1. In the foregoing example, the attack path is A→B→C→D→E, and examples of an asset weight calculation manner are as follows.

According to the foregoing principle, the asset weight of the node A is as follows: Because the node A is located in the B/M domain, the network location weight is 2; because the service attribute of the node A is the "border server", the weight corresponding to the "service attribute" is 5; and therefore, the asset weight of the node A is 2+5=7.

According to the foregoing principle, the asset weight of the node B is as follows: Because the node B is located in the B/M domain, the network location weight is 2; because the service attribute of the node B is the "jump node", the weight corresponding to the "service attribute" is 3; and therefore, the asset weight of the node B is 2+3=5.

According to the foregoing principle, the asset weight of the node C is as follows: Because the node C is located in the O domain OSS management plane, the network location weight is 3; because the service attribute of the node C is the "jump node", the weight corresponding to the "service attribute" is 3; and therefore, the asset weight of the node C is 3+5=8.

According to the foregoing principle, the asset weight of the node D is as follows: Because the node D is located in the O domain OSS operation and maintenance plane, the network location weight is 4; because the service attribute of node D is the "jump node", the weight corresponding to the "service attribute" is 3; and therefore, the asset weight of the node D is 4+5=9.

According to the foregoing principle, the asset weight of the node E is as follows: Because the node E is located in the O domain network element, the network location weight is 5; because the service attribute of node E is the "network management VM", the weight corresponding to the "service attribute" is 5; and therefore, the asset weight of the node E is 5+5=10.

2. In the foregoing example, the attack path is A→B→C→D→E, and examples of a manner of calculating the attack phase weight and the attack type weight are as follows.

For the node A, the penetration phase (1), and scanning (2).

For the node B, penetration diffusion (2), and vulnerability exploitation (2).

For the node C, penetration diffusion (2), and vulnerability exploitation (2).

For the node D, elevation of privilege (3), and elevation of privilege (3).

For the node E, theft/destruction (5), and tampering (5).

3. In the foregoing example, the attack path is A→B→C→D→E, and examples of a time weight calculation manner are as follows:

The attack time of the node A: 7 days.

The attack time of the node B: 5 days.
The attack time of the node C: 3 days.
The attack time of the node D: 3 days.
The attack time of the node E: 30 days.

4. In the foregoing example, the attack path is A→B→C→D→E, and quantities of attack paths are as follows:

A quantity of attack paths of the node A: 1.
A quantity of attack paths of the node B: 2.
A quantity of attack paths of the node C: 3.
A quantity of attack paths of the node D: 4.
A quantity of attack paths of the node E: 5.

5. In the foregoing example, the attack path is A→B→C→D→E, and examples of a manner of calculating the threat burst parameter value are as follows:

Burst point determining value of the node A: M=1*(7*1*2*7)=98.
Burst point determining value of the node B: M=2*(5*2*2*5)=200.
Burst point determining value of the node C: M=3*(8*2*2*3)=288.
Burst point determining value of the node D: M=4*(9*3*3*3)=972.
Burst point determining value of the node E: M=5*(10*5*5*30)=37500.

For example, if the burst threshold is set to 10000, the node E meets a burst rule, and the node E needs to perform threat burst and capturing.

6. In the foregoing example, the attack path is A→B→C→D→E, E is a burst node, and F is a capture node.

After the node E performs threat burst, a controlled malicious connection is blocked. The malicious connection is generated by a malicious process.

For example, the malicious process and a permission are cleared, and the malicious process <the malicious connection is generated in this example> is an event subject that generates a threat event on each node. When the threat event is generated, detailed information of the event subject is collected. For example, <information such as a process name, an ID, and a permission> is collected. If the event subject is a malicious process file, the file is cleared based on a name ID and a path of the process. If the event subject is a permission problem, permission bit information of the process needs to be modified through system call.

The threat burst node synchronizes the burst information and repair information to other nodes. The burst information is information about a threat event that bursts on the node. For example, if a threat event is generated after a malicious connection event generated by a malicious process bursts, the burst information is the threat event information, including information such as an event name, a type, a time of occurrence, an event subject, and detailed descriptions. The repair information indicates statuses of which events in an event chain are "repaired". In this case, a repair status of the event is recovered in the event chain of each node. For example, the repair status is "unrepaired" or "repaired".

It can be learned from the foregoing description that, in this embodiment of this application, the threat burst point can be discovered through distributed network element collaboration, and the node device has a source tracing and response capability.

Optionally, the node device is a communications technology/Internet technology (Communications technology/Internet Technology, CT/IT) network element. In this embodiment of this application, a resilient network cluster is formed by using a built-in security component of the node device, and attack collaboration, association analysis of the attack graph, and real-time response are supported, to ensure distributed real-time intelligent defense of a network and network nodes in a domain.

An existing CT/IT network element does not have a network-level threat discovery capability, and distributed intelligent collaboration is not formed in an entire network currently. The solution in this embodiment of this application is an intelligent defense method for intrinsic distributed collaboration. Compared with building a centralized big data association analysis system, the solution of this embodiment of this application belongs to a different direction, and is more competitive in costs, defense efficiency, and a defense effect.

It should be noted that, for ease of description, the foregoing method embodiments are expressed as a series of action combines. However, a person skilled in the art should appreciate that this application is not limited to the described order of the actions, because based on this application, some steps are performed in another order or simultaneously. Second, a person skilled in the art should appreciate that all the embodiments described in this specification are embodiments, and the related actions and modules are not necessarily required by this application.

To better implement the foregoing solutions in embodiments of this application, the following further provides a related system used to implement the foregoing solutions.

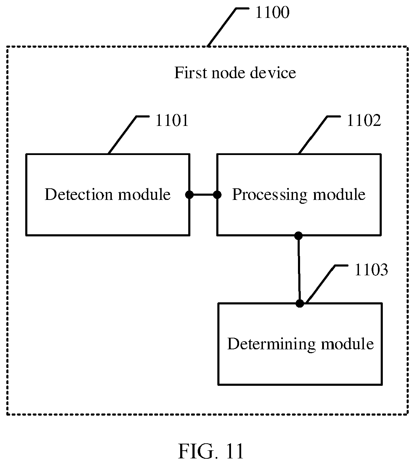

With reference to FIG. 11, a first node device 1100 according to an embodiment of this application includes a detection module 1101, a processing module 1102, and a determining module 1103.

The detection module is configured to detect a first abnormal behavior on the first node device;

the processing module is configured to: determine, based on the first abnormal behavior and first abnormal event information, that a condition for generating threat burst information is met, and generate the threat burst information, where the first abnormal event information is sent by a second node device before the first node device detects the first abnormal behavior, the first abnormal event information includes attribute description information of a first abnormal event, an attack phase of the first abnormal event, and an attack type of the first abnormal event, the threat burst information includes attribute description information of a second abnormal event and threat degree information corresponding to the second abnormal event, and the second abnormal event is generated through association based on the first abnormal event and the first abnormal behavior; and

the determining module is configured to determine a handling measure for the second abnormal event based on the threat burst information.

Optionally, the processing module further performs the following operations: obtaining a network location of the first node device and a service attribute corresponding to the first node device; and determining, based on the first abnormal behavior, the first abnormal event information, the network location of the first node device, and the service attribute corresponding to the first node device, that the condition for generating the threat burst information is met.

Optionally, the processing module further performs the following operations: detecting a second abnormal behavior on the first node device; determining, based on the second abnormal behavior and third abnormal event information, that the condition for generating the threat burst information is not met, and generating fourth abnormal event information, where the third abnormal event information is sent by a third node device before the first node device detects the second abnormal behavior, the third abnormal event information includes attribute description information of a third abnormal event, an attack phase of the third abnormal event, and an attack type of the third abnormal event, and a fourth abnormal event is generated through association based on the third abnormal event and the second abnormal behavior; and sending the fourth abnormal event information to a network to which the first node device belongs.

Optionally, the processing module further performs the following operations: obtaining the network location of the first node device and the service attribute corresponding to the first node device; and determining, based on the second abnormal behavior, the third abnormal event information, the network location of the first node device, and the service attribute corresponding to the first node device, that the condition for generating the threat burst information is not met.

Optionally, the first abnormal event information is sent by the second node device according to a diffusion protocol.

Optionally, the processing module further performs the following operations: determining an attack phase of the first abnormal behavior and an attack type of the first abnormal behavior based on the first abnormal behavior and the first abnormal event information; determining a first attack phase weight value of the first abnormal behavior based on the attack phase of the first abnormal behavior, where the first attack phase weight value indicates importance of the attack phase of the first abnormal behavior for determining whether the condition for generating the threat burst information is met; determining a first attack type weight value of the first abnormal behavior based on the attack type of the first abnormal behavior, where the first attack type weight value indicates importance of the attack type of the first abnormal behavior for determining whether the condition for generating the threat burst information is met; obtaining a first threat burst parameter value of the first node device based on the first attack phase weight value and the first attack type weight value; and when the first threat burst parameter value is greater than a preset first burst threshold, determining that the condition for generating the threat burst information is met.

Optionally, the processing module further performs the following operation: obtaining the first threat burst parameter value in the following manner: M1=S*K, where M1 represents the first threat burst parameter value, S represents the first attack phase weight value, K represents the first attack type weight value, and * represents a multiplication operation.

Optionally, the processing module further performs the following operations: determining an attack phase of the first abnormal behavior and an attack type of the first abnormal behavior based on the first abnormal behavior and the first abnormal event information; determining a first attack phase weight value of the first abnormal behavior based on the attack phase of the first abnormal behavior, where the first attack phase weight value indicates importance of the attack phase of the first abnormal behavior for determining whether the condition for generating the threat burst information is met; determining a first attack type weight value of the first abnormal behavior based on the attack type of the first abnormal behavior, where the first attack type weight value indicates importance of the attack type of the first abnormal behavior for determining whether the condition for generating the threat burst information is met; determining a first network asset weight value of the first node device based on the network location of the first node device and the service attribute corresponding to the first node device, where the first network asset weight value indicates asset importance of the first node device in a network to which the first node device belongs; obtaining a second threat burst parameter value of the first node device based on the first attack phase weight value, the first attack type weight value, and the first network asset weight value; and when the second threat burst parameter value is greater than a preset second burst threshold, determining that the condition for generating the threat burst information is met.

Optionally, the processing module further performs the following operation:
obtaining the second threat burst parameter value in the following manner: M2=A*S*K, where M2 represents the second threat burst parameter value, A represents the first network asset weight value, S represents the first attack phase weight value, K represents the first attack type weight value, and * represents a multiplication operation.

Optionally, the processing module further performs the following operations: determining attack duration information of the first abnormal behavior and attack path depth information of the first abnormal behavior based on the first abnormal behavior and the attribute description information of the first abnormal event; and obtaining the second threat burst parameter value based on the first attack phase weight value, the first attack type weight value, the first network asset weight value, the attack duration information of the first abnormal behavior, and the attack path depth information of the first abnormal behavior.

Optionally, the processing module further performs the following operation: obtaining the second threat burst parameter value in the following manner: M2=N*A*S*K*T, where M2 represents the second threat burst parameter value, N represents the attack path depth information of the first abnormal behavior, A represents the first network asset weight value, S represents the first attack phase weight value, K represents the first attack type weight value, T represents the attack duration information of the first abnormal behavior, and * represents a multiplication operation.

Optionally, the processing module further performs the following operations: determining an attack phase of the second abnormal behavior and an attack type of the second abnormal behavior based on the second abnormal behavior and the third abnormal event information; determining a second attack phase weight value of the second abnormal behavior based on the attack phase of the second abnormal behavior, where the second attack phase weight value indicates importance of the attack phase of the second abnormal behavior for determining whether the condition for generating the threat burst information is met; determining a second attack type weight value of the second abnormal behavior based on the attack type of the second abnormal behavior, where the second attack type weight value indicates importance of the attack type of the second abnormal behavior for determining whether the condition for generating the threat burst information is met; obtaining a third threat burst parameter value of the first node device based on the second attack phase weight value and the second attack type weight value; and when the third threat burst parameter value is less than or equal to a preset third burst threshold, determining that the condition for generating the threat burst information is not met.

Optionally, the processing module further performs the following operations: determining an attack phase of the second abnormal behavior and an attack type of the second abnormal behavior based on a second abnormal behavior and the second abnormal event information; determining a second attack phase weight value of the second abnormal behavior based on the attack phase of the second abnormal behavior, where the second attack phase weight value indicates importance of the attack phase of the second abnormal behavior for determining whether the condition for generating the threat burst information is met; determining a second attack type weight value of the second abnormal behavior based on the attack type of the second abnormal behavior, where the second attack type weight value indicates importance of the attack type of the second abnormal behavior for determining whether the condition for generating the threat burst information is met; determining a first network asset weight value of the first node device based on the network location of the first node device and the service attribute corresponding to the first node device, where the first network asset weight value indicates asset importance of the first node device in a network to which the first node device belongs; obtaining a fourth threat burst parameter value of the first node device based on the second attack phase weight value, the second attack type weight value, and the first network asset weight value; and when the fourth threat burst parameter value is less than or equal to a preset third burst threshold, determining that the condition for generating the threat burst information is not met.

Optionally, the determining module further performs the following operation: determining, based on the threat burst information, a node device that executes the handling measure, and triggering the node device that executes the handling measure to execute the handling measure.

Optionally, the determining module further performs the following operations: determining a first network asset weight value of the first node device based on the network location of the first node device and the service attribute corresponding to the first node device, where the first network asset weight value indicates asset importance of the first node device in a network to which the first node device belongs; obtaining attack duration information of the second abnormal event; determining, based on a preset node selection table, a candidate node device set corresponding to a combination of the first network asset weight value and the attack duration information of the second abnormal event, where the node selection table includes a correspondence among a network asset weight value, attack duration information, and a candidate node device; and selecting, from the candidate node device set, a candidate node device as the node device that executes the handling measure, where the selected candidate node device is a candidate node device that is in the candidate node device set and that has a shortest topological distance from the first node device.

Optionally, the determining module further performs the following operation: when the node device that executes the handling measure is the first node device, executing the handling measure for the second abnormal event based on the threat burst information.

Optionally, the determining module further performs the following operations: when the second abnormal event is a malicious connection, blocking the connection; and/or, when the second abnormal event is a malicious process, clearing the process; and/or, when the second abnormal event is a malicious permission, modifying the permission; and/or, when the second abnormal event is tampering with a file, repairing the file; and/or, when the second abnormal event is an exception of a memory, performing software and hardware resetting on the memory.

Based on the example description of the foregoing embodiment, the first node device communicates with the second node device, and the first node device can receive the first abnormal event information from the second node device. The first node device detects the first abnormal behavior. The first node device determines, based on the detected first abnormal behavior and the first abnormal event information, that the condition for generating the threat burst information is met, and generates the threat burst information. The first node device further determines the handling measure for the second abnormal event in the threat burst information based on the threat burst information, so that the first node device can detect an abnormal event, and the first node device further determines the handling measure for the abnormal event. Therefore, in this embodiment of this application, the node device in a network can detect the abnormal event without reporting a log, so that consumption of network bandwidth resources, storage resources, and processing resources is reduced, and network traffic, storage resources, and processing resources are saved.

It should be noted that content such as information exchange and an execution process between the modules/units of the foregoing system is based on the same concept as method embodiments of this application, and brings the same technical effects as the method embodiments of this application. For specific content, refer to the descriptions in the foregoing method embodiments of this application. Details are not described herein again.

In addition, it should be noted that the described apparatus embodiment is merely an example. The units described as separate parts are or are not physically separate, and parts displayed as units are or are not physical units, are located in one position, or are distributed on a plurality of network units. Some or all of the modules are selected based on actual requirements, to achieve the objective of the solution of this embodiment. In addition, in the accompanying drawing of the apparatus embodiment provided in this application, a connection relationship between modules indicates that there is communication connection between the modules, and the communication connection is specifically implemented as one or more communication buses or signal cables.

Based on the descriptions of the foregoing implementations, a person skilled in the art clearly understands that this application may be implemented by using software plus necessary general-purpose hardware, and certainly may alternatively be implemented by using dedicated hardware, including a dedicated integrated circuit, a dedicated CPU, a dedicated memory, a dedicated component, and the like. Generally, any function that is completed by a computer program is easily implemented by using corresponding hardware. In addition, specific hardware structures used to implement a same function are diversified, for example, an analog circuit, a digital circuit, or a dedicated circuit. However, as for this application, software program implementation is a better implementation in most cases. Based on such an understanding, the technical solutions of this application essentially or the part contributing to the conventional technology is embodied in a form of a software product. The computer software product is stored in a readable storage medium, such as a floppy disk, a USB flash drive, a removable hard disk, a ROM, a RAM, a magnetic disk, or an optical disc of a computer, and includes several instructions for enabling a computer device (a personal computer, a server, or a network device) to perform the methods in embodiments of this application.

It is clearly understood by a person skilled in the art that, for the purpose of convenient and brief description, for a detailed working process of the foregoing system, apparatus, and unit, refer to a corresponding process in the foregoing method embodiments, and details are not described herein again.

All or some of the foregoing embodiments are implemented by using software, hardware, firmware, or any combination thereof. When software is used to implement the embodiments, all or some of the embodiments are implemented in a form of a computer program product.

The computer program product includes one or more computer instructions. When the computer program instructions are loaded and executed on a computer, procedures or functions according to embodiments of this application are entirely or partially generated. The computer is a general-purpose computer, a special-purpose computer, a computer network, or another programmable apparatus. The computer instructions are stored in a computer-readable storage medium, or transmitted from one computer-readable storage medium to another computer-readable storage medium. For example, the computer instructions are transmitted from a website, computer, server, or data center to another website, computer, server, or data center in a wired (for example, a coaxial cable, an optical fiber, or a digital subscriber line (DSL)) or wireless (for example, infrared, wireless, or microwaves) manner. The computer-readable storage medium is any usable medium that can be stored in a computer, or a data storage device, such as a server or a data center, integrating one or more usable media. The usable medium is a magnetic medium (for example, a floppy disk, a hard disk, or a magnetic tape), an optical medium (for example, a DVD), a semiconductor medium (for example, a solid state disk (Solid State Disk, SSD)), or the like.

**Claims**

1. A network threat processing method, wherein the method comprises:

detecting (301), by a first node device (200), a first abnormal behavior on the first node device (200);
determining (302), by the first node device (200) based on the first abnormal behavior and first abnormal event information, that a condition for generating threat burst information is met, and generating the threat burst information, wherein the first abnormal event information is sent by a second node device to the first node device before the first node device (200) detects the first abnormal behavior, the first abnormal event information comprises attribute description information of a first abnormal event, an attack phase of the first abnormal event, wherein the attack phase is a phase in which the first abnormal event attacks a network, and an attack type of the first abnormal event, wherein the attack type is a type corresponding to an attack means of the first abnormal event in the network, the threat burst information comprises attribute description information of a second abnormal event and threat degree information corresponding to the second abnormal event, and the second abnormal event is generated by the first node device through association based on the first abnormal event and the first abnormal behavior, wherein the threat burst information is information about a threat event that bursts on the first node device (200), wherein the second abnormal event is a record generated by the first node device in the network based on the detected first abnormal behavior,
wherein the determining, by the first node device (200) based on the first abnormal behavior and first abnormal event information, that a condition for generating threat burst information is met comprises:

determining, by the first node device (200), an attack phase of the first abnormal behavior and an attack type of the first abnormal behavior based on the first abnormal behavior and the first abnormal event information;

determining, by the first node device (200), a first attack phase weight value of the first abnormal behavior based on the attack phase of the first abnormal behavior, wherein the first attack phase weight value indicates importance of the attack phase of the first abnormal behavior for determining whether the condition for generating the threat burst information is met;

determining, by the first node device (200), a first attack type weight value of the first abnormal behavior based on the attack type of the first abnormal behavior, wherein the first attack type weight value indicates importance of the attack type of the first abnormal behavior for determining whether the condition for generating the threat burst information is met;

obtaining, by the first node device (200), a first threat burst parameter value of the first node device (200) based on the first attack phase weight value and the first attack type weight value; and

when the first threat burst parameter value is greater than a preset first burst threshold, determining, by the first node device (200), that the condition for generating the threat burst information is met; and

determining (303), by the first node device (200), a handling measure for the second abnormal event based on the threat burst information,

wherein the determining, by the first node device (200), a handling measure for the second abnormal event based on the threat burst information comprises:

determining, by the first node device (200) based on the threat burst information, a node device that executes the handling measure, and triggering the node device that executes the handling measure to execute the handling measure.

2. The method according to claim 1, wherein the determining, by the first node device (200) based on the first abnormal behavior and first abnormal event information, that a condition for generating threat burst information is met comprises:

obtaining, by the first node device (200), a network location of the first node device (200) and a service attribute corresponding to the first node device (200); and

determining, by the first node device (200) based on the first abnormal behavior, the first abnormal event information, the network location of the first node device (200), and the service attribute corresponding to the first node device (200), that the condition for generating the threat burst information is met.

3. The method according to claim 1 or 2, wherein the method comprises:

detecting, by the first node device (200), a second abnormal behavior on the first node device (200);

determining, by the first node device (200) based on the second abnormal behavior and third abnormal event information, that the condition for generating the threat burst information is not met, and generating fourth abnormal event information, wherein the third abnormal event information is sent by a third node device before the first node device (200) detects the second abnormal behavior, the third abnormal event information comprises attribute description information of a third abnormal event, an attack phase of the third abnormal event, and an attack type of the third abnormal event, and a fourth abnormal event is generated through association based on the third abnormal event and the second abnormal behavior; and

sending, by the first node device (200), the fourth abnormal event information to a network to which the first node device (200) belongs.

4. The method according to claim 3, wherein the determining, by the first node device (200) based on the second abnormal behavior and third abnormal event information, that the condition for generating the threat burst information is not met comprises:

obtaining, by the first node device (200), the network location of the first node device (200) and the service attribute corresponding to the first node device (200); and

determining, by the first node device (200) based on the second abnormal behavior, the third abnormal event information, the network location of the first node device (200), and the service attribute corresponding to the first node device (200), that the condition for generating the threat burst information is not met.

5. The method according to any one of claims 1 to 4, wherein the first abnormal event information is sent by the second node device according to a diffusion protocol.

6. The method according to claim 2, wherein the determining, by the first node device (200) based on the first abnormal behavior, the first abnormal event information, the network location of the first node device (200), and the service attribute corresponding to the first node device (200), that the condition for generating the threat burst information is met comprises:

determining, by the first node device (200), an attack phase of the first abnormal behavior and an attack type of the first abnormal behavior based on the first abnormal behavior and the first abnormal event information;

determining, by the first node device (200), a first attack phase weight value of the first abnormal behavior based on the attack phase of the first abnormal behavior, wherein the first attack phase weight value indicates importance of the attack phase of the first abnormal behavior for determining whether the condition for generating the threat burst information is met;

determining, by the first node device (200), a first attack type weight value of the first abnormal behavior based on the attack type of the first abnormal behavior, wherein the first attack type weight value indicates importance of the attack type of the first abnormal behavior for determining whether the condition for generating the threat burst information is met;

determining, by the first node device (200), a first network asset weight value of the first node device based on the network location of the first node device (200) and the service attribute corresponding to the first node device (200), wherein the first network asset weight value indicates asset importance of the first node device (200) in a network to which the first node device (200) belongs;

obtaining, by the first node device (200), a second threat burst parameter value of the first node device (200) based on the first attack phase weight value, the first attack type weight value, and the first network asset weight value; and

when the second threat burst parameter value is greater than a preset second burst threshold, determining, by the first node device (200), that the condition for generating the threat burst information is met.

7. The method according to claim 6, wherein the obtaining, by the first node device (200), a second threat burst parameter value of the first node device (200) based on the first attack phase weight value, the first attack type weight value, and the first network asset weight value comprises:

determining, by the first node device (200), attack duration information of the first abnormal behavior and attack path depth information of the first abnormal behavior based on the first abnormal behavior and the attribute description information of the first abnormal event; and

obtaining, by the first node device (200), the second threat burst parameter value based on the first attack phase weight value, the first attack type weight value, the first network asset weight value, the attack duration information of the first abnormal behavior, and the attack path depth information of the first abnormal behavior.

8. The method according to claim 3, wherein the determining, by the first node device (200) based on the second abnormal behavior and third abnormal event information, that the condition for generating the threat burst information is not met comprises:

determining, by the first node device (200), an attack phase of the second abnormal behavior and an attack type of the second abnormal behavior based on the second abnormal behavior and the third abnormal event information;

determining, by the first node device (200), a second attack phase weight value of the second abnormal behavior based on the attack phase of the second abnormal behavior, wherein the second attack phase weight value indicates importance of the attack phase of the second abnormal behavior for determining whether the condition for generating the threat burst information is met;

determining, by the first node device (200), a second attack type weight value of the second abnormal behavior based on the attack type of the second abnormal behavior, wherein the second attack type weight value indicates importance of the attack type of the second abnormal behavior for determining whether the condition for generating the threat burst information is met;

obtaining, by the first node device (200), a third threat burst parameter value of the first node device (200) based on the second attack phase weight value and the second attack type weight value; and

when the third threat burst parameter value is less than or equal to a preset third burst threshold, determining, by the first node device (200), that the condition for generating the threat burst information is not met.

9. The method according to claim 1, wherein the determining, by the first node device (200) based on the threat burst information, a node device that executes the handling measure comprises:

determining, by the first node device (200), a first network asset weight value of the first node device based on the network location of the first node device (200) and the service attribute corresponding to the first node device (200), wherein the first network asset weight value indicates asset importance of the first node device (200) in a network to which the first node device (200) belongs;

obtaining, by the first node device (200), attack duration information of the second abnormal event;

determining, by the first node device (200) based on a preset node selection table, a candidate node device set corresponding to a combination of the first network asset weight value and the attack duration information of the second abnormal event, wherein the node selection table comprises a correspondence among a network asset weight value, attack duration information, and a candidate node device; and

selecting, by the first node device (200) from the candidate node device set, a candidate node device as the node device that executes the handling measure, wherein the selected candidate node device is a candidate node device that is in the candidate node device set and that has a shortest topological distance from the first node device (200).

10. A network threat processing system, comprising a first node device (200) and a second node device, wherein

the second node device is configured to: send first abnormal event information to the first node device (200), wherein the first abnormal event information comprises attribute description information of a first abnormal event, an attack phase of the first abnormal event, and an attack type of the first abnormal event; and

the first node device (200) is configured to perform any one of the methods according to claims 1 - 9.

11. The network threat processing system according to claim 10, wherein the network threat processing system further comprises a third node device, wherein

the third node device is configured to send third abnormal event information to the first node device, wherein the third abnormal event information comprises attribute description information of a third abnormal event, an attack phase of the third abnormal event, and an attack type of the third abnormal event; and

the first node device (200) is configured to: detect a second abnormal behavior on the first node device (200); determine, based on the second abnormal behavior and the third abnormal event information, that the condition for generating the threat burst information is not met, and generate fourth abnormal event information, wherein a fourth abnormal event is generated through association based on the third abnormal event and the second abnormal behavior; and send the fourth abnormal event information to a network to which the first node device (200) belongs.

12. The network threat processing system according to claim 10 or 11, wherein the network threat processing system further comprises a fourth node device, wherein

the first node device (200) is configured to: determine, based on the threat burst information, that the fourth node device is to execute the handling measure, and send the threat burst information to the fourth node device; and

the fourth node device is configured to: receive the threat burst information from the first node device (200), and execute the handling measure for the second abnormal event based on the threat burst information.

13. A communication apparatus, wherein communication apparatus is a first node device (200) and the communication apparatus is configured to perform any one of the methods according to claims 1 - 9.

**Patentansprüche**

1. Verfahren zur Verarbeitung von Netzwerkbedrohungen, wobei das Verfahren Folgendes umfasst:

Detektieren (301), durch eine erste Knoteneinrichtung (200), eines ersten abnormalen Verhaltens auf der ersten Knoteneinrichtung (200);

Bestimmen (302), durch die erste Knoteneinrichtung (200) basierend auf dem ersten abnormalen Verhalten und ersten abnormalen Ereignisinformationen, dass eine Bedingung zum Erzeugen von Bedrohungsausbruchinformationen erfüllt ist, und Erzeugen der Bedrohungsausbruchinformationen, wobei die ersten abnormalen Ereignisinformationen durch eine zweite Knoteneinrichtung an die erste Knoteneinrichtung gesendet werden, bevor die erste Knoteneinrichtung (200) das erste abnormale Verhalten detektiert, die ersten abnormalen Ereignisinformationen Attributbeschreibungsinformationen eines ersten abnormalen Ereignisses, eine Angriffsphase des ersten abnormalen Ereignisses, wobei die Angriffsphase eine Phase ist, in der das erste abnormale Ereignis ein Netzwerk angreift, und eine Angriffsart des ersten abnormalen Ereignisses umfassen, wobei die Angriffsart eine Art ist, die einem Angriffsmittel des ersten abnormalen Ereignisses in dem Netzwerk entspricht, die Bedrohungsausbruchinformationen Attributbeschreibungsinformationen eines zweiten abnormalen Ereignisses und Bedrohungsgradinformationen umfassen, die dem zweiten abnormalen Ereignis entsprechen, und das zweite abnormale Ereignis durch die erste Knoteneinrichtung über Zuordnung basierend auf dem ersten abnormalen Ereignis und dem ersten abnormalen Verhalten erzeugt wird, wobei die Bedrohungsausbruchinformationen Informationen über ein Bedrohungsereignis sind, das auf der ersten Knoteneinrichtung (200) ausbricht, wobei das zweite abnormale Ereignis eine Aufzeichnung ist, die durch die erste Knoteneinrichtung in dem Netzwerk basierend auf dem detektierten ersten abnormalen Verhalten erzeugt wird,

wobei das Bestimmen, durch die erste Knoteneinrichtung (200) basierend auf dem ersten abnormalen Verhalten und den ersten abnormalen Ereignisinformationen, dass eine Bedingung zum Erzeugen von Bedrohungsausbruchinformationen erfüllt ist, Folgendes umfasst:

Bestimmen, durch die erste Knoteneinrichtung (200), einer Angriffsphase des ersten abnormalen Verhaltens und einer Angriffsart des ersten abnormalen Verhaltens basierend auf dem ersten abnormalen Verhalten und den ersten abnormalen Ereignisinformationen;

Bestimmen, durch die erste Knoteneinrichtung (200), eines ersten Angriffsphasengewichtungswerts des ersten abnormalen Verhaltens basierend auf der Angriffsphase des ersten abnormalen Verhaltens, wobei der erste Angriffsphasengewichtungswert eine Wichtigkeit der Angriffsphase des ersten abnormalen Verhaltens zum Bestimmen angibt, ob die Bedingung zum Erzeugen der Bedrohungsausbruchinformationen erfüllt ist;

Bestimmen, durch die erste Knoteneinrichtung (200), eines ersten Angriffsartgewichtungswerts des ersten abnormalen Verhaltens basierend auf der Angriffsart des ersten abnormalen Verhaltens, wobei der erste Angriffsartgewichtungswert eine Wichtigkeit der Angriffsart des ersten abnormalen Verhaltens zum Bestimmen angibt, ob die Bedingung zum Erzeugen der Bedrohungsausbruchinformationen erfüllt ist;

Erlangen, durch die erste Knoteneinrichtung (200), eines ersten Bedrohungsausbruchparameterwerts der ersten Knoteneinrichtung (200) basierend auf dem ersten Angriffsphasengewichtungswert und dem ersten Angriffsartgewichtungswert; und

wenn der erste Bedrohungsausbruchparameterwert größer als ein voreingestellter erster Ausbruchschwellenwert ist, Bestimmen, durch die erste Knoteneinrichtung (200), dass die Bedingung zum Erzeugen der Bedrohungsausbruchinformationen erfüllt ist; und

Bestimmen (303), durch die erste Knoteneinrichtung (200), einer Behandlungsmaßnahme für das zweite abnormale Ereignis basierend auf den Bedrohungsausbruchinformationen,

wobei das Bestimmen, durch die erste Knoteneinrichtung (200), einer Behandlungsmaßnahme für das zweite abnormale Ereignis basierend auf den Bedrohungsausbruchinformationen Folgendes umfasst:

Bestimmen, durch die erste Knoteneinrichtung (200) basierend auf den Bedrohungsausbruchinformationen, einer Knoteneinrichtung, welche die Behandlungsmaßnahme ausführt, und Auslösen der Knoteneinrichtung, welche die Behandlungsmaßnahme ausführt, um die Behandlungsmaßnahme auszuführen.

2. Verfahren nach Anspruch 1, wobei das Bestimmen, durch die erste Knoteneinrichtung (200) basierend auf dem ersten abnormalen Verhalten und den ersten abnormalen Ereignisinformationen, dass eine Bedingung zum Erzeugen von Bedrohungsausbruchinformationen erfüllt ist, Folgendes umfasst:

Erlangen, durch die erste Knoteneinrichtung (200), eines Netzwerkstandorts der ersten Knoteneinrichtung (200) und eines Dienstattributs, das der ersten Knoteneinrichtung (200) entspricht; und

Bestimmen, durch die erste Knoteneinrichtung (200) basierend auf dem ersten abnormalen Verhalten, den ersten abnormalen Ereignisinformationen, dem Netzwerkstandort der ersten Knoteneinrichtung (200) und dem Dienstattribut, das der ersten Knoteneinrichtung (200) entspricht, dass die Bedingung zum Erzeugen der Bedrohungsausbruchinformationen erfüllt ist.

3. Verfahren nach Anspruch 1 oder 2, wobei das Verfahren Folgendes umfasst:

Detektieren, durch die erste Knoteneinrichtung (200) eines zweiten abnormalen Verhaltens auf der ersten Knoteneinrichtung (200);

Bestimmen, durch die erste Knoteneinrichtung (200) basierend auf dem zweiten abnormalen Verhalten und dritten abnormalen Ereignisinformationen, dass die Bedingung zum Erzeugen der Bedrohungsausbruchinformationen nicht erfüllt ist, und Erzeugen vierter abnormaler Ereignisinformationen, wobei die dritten abnormalen Ereignisinformationen durch eine dritte Knoteneinrichtung gesendet werden, bevor die erste Knoteneinrichtung (200) das zweite abnormale Verhalten detektiert, die dritten abnormalen Ereignisinformationen Attributbeschreibungsinformationen eines dritten abnormalen Ereignisses, eine Angriffsphase des dritten abnormalen Ereignisses und eine Angriffsart des dritten abnormalen Ereignisses umfassen und ein viertes abnormales Ereignis über Zuordnung basierend auf dem dritten abnormalen Ereignis und dem zweiten abnormalen Verhalten erzeugt wird; und

Senden, durch die erste Knoteneinrichtung (200), der vierten abnormalen Ereignisinformationen an ein Netzwerk, zu dem die erste Knoteneinrichtung (200) gehört.

4. Verfahren nach Anspruch 3, wobei das Bestimmen, durch die erste Knoteneinrichtung (200) basierend auf dem zweiten abnormalen Verhalten und den dritten abnormalen Ereignisinformationen, dass die Bedingung zum Erzeugen der Bedrohungsausbruchinformationen nicht erfüllt ist, Folgendes umfasst:

Erlangen, durch die erste Knoteneinrichtung (200), des Netzwerkstandorts der ersten Knoteneinrichtung (200) und des Dienstattributs, das der ersten Knoteneinrichtung (200) entspricht; und

Bestimmen, durch die erste Knoteneinrichtung (200) basierend auf dem zweiten abnormalen Verhalten, den dritten abnormalen Ereignisinformationen, dem Netzwerkstandort der ersten Knoteneinrichtung (200) und dem Dienstattribut, das der ersten Knoteneinrichtung (200) entspricht, dass die Bedingung zum Erzeugen der Bedrohungsausbruchinformationen nicht erfüllt ist.

5. Verfahren nach einem der Ansprüche 1 bis 4, wobei die ersten abnormalen Ereignisinformationen durch die zweite Knoteneinrichtung gemäß einem Diffusionsprotokoll gesendet werden.

6. Verfahren nach Anspruch 2, wobei das Bestimmen, durch die erste Knoteneinrichtung (200) basierend auf dem ersten abnormalen Verhalten, den ersten abnormalen Ereignisinformationen, dem Netzwerkstandort der ersten Knoteneinrichtung (200) und dem Dienstattribut, das der ersten Knoteneinrichtung (200) entspricht, dass die Bedingung zum Erzeugen der Bedrohungsausbruchinformationen erfüllt ist, Folgendes umfasst:

Bestimmen, durch die erste Knoteneinrichtung (200), einer Angriffsphase des ersten abnormalen Verhaltens und einer Angriffsart des ersten abnormalen Verhaltens basierend auf dem ersten abnormalen Verhalten und den ersten abnormalen Ereignisinformationen;

Bestimmen, durch die erste Knoteneinrichtung (200), eines ersten Angriffsphasengewichtungswerts des ersten abnormalen Verhaltens basierend auf der Angriffsphase des ersten abnormalen Verhaltens, wobei der erste Angriffsphasengewichtungswert eine Wichtigkeit der Angriffsphase des ersten abnormalen Verhaltens zum Bestimmen angibt, ob die Bedingung zum Erzeugen der Bedrohungsausbruchinformationen erfüllt ist;

Bestimmen, durch die erste Knoteneinrichtung (200), eines ersten Angriffsartgewichtungswerts des ersten abnormalen Verhaltens basierend auf der Angriffsart des ersten abnormalen Verhaltens, wobei der erste Angriffsartgewichtungswert eine Wichtigkeit der Angriffsart des ersten abnormalen Verhaltens zum Bestimmen angibt, ob die Bedingung zum Erzeugen der Bedrohungsausbruchinformationen erfüllt ist;

Bestimmen, durch die erste Knoteneinrichtung (200), eines ersten Netzwerkvermögensgewichtungswerts der ersten Knoteneinrichtung basierend auf dem Netzwerkstandort der ersten Knoteneinrichtung (200) und dem Dienstattribut, das der ersten Knoteneinrichtung (200) entspricht, wobei der erste Netzwerkvermögensgewichtungswert eine Vermögenswichtigkeit der ersten Knoteneinrichtung (200) in einem Netzwerk angibt, zu dem die erste Knoteneinrichtung (200) gehört;

Erlangen, durch die erste Knoteneinrichtung (200), eines zweiten Bedrohungsausbruchparameterwerts der ersten Knoteneinrichtung (200) basierend auf dem ersten Angriffsphasengewichtungswert, dem ersten Angriffsartgewichtungswert und dem ersten Netzwerkvermögensgewichtungswert; und

wenn der zweite Bedrohungsausbruchparameterwert größer als ein voreingestellter zweiter Ausbruchschwellenwert ist, Bestimmen, durch die erste Knoteneinrichtung (200), dass die Bedingung zum Erzeugen der Bedrohungsausbruchinformationen erfüllt ist.

7. Verfahren nach Anspruch 6, wobei das Erlangen, durch die erste Knoteneinrichtung (200), eines zweiten Bedrohungsausbruchparameterwerts der ersten Knoteneinrichtung (200) basierend auf dem ersten Angriffsphasengewichtungswert, dem ersten Angriffsartgewichtungswert und dem ersten Netzwerkvermögensgewichtungswert Folgendes umfasst:

Bestimmen, durch die erste Knoteneinrichtung (200), von Angriffsdauerinformationen des ersten abnormalen Verhaltens und Angriffspfadtiefeninformationen des ersten abnormalen Verhaltens basierend auf dem ersten abnormalen Verhalten und den Attributbeschreibungsinformationen des ersten abnormalen Ereignisses; und

Erlangen, durch die erste Knoteneinrichtung (200), des zweiten Bedrohungsausbruchparameterwerts basierend auf dem ersten Angriffsphasengewichtungswert, dem ersten Angriffsartgewichtungswert, dem ersten Netzwerkvermögensgewichtungswert, den Angriffsdauerinformationen des ersten abnormalen Verhaltens und den Angriffspfadtiefeninformationen des ersten abnormalen Verhaltens.

8. Verfahren nach Anspruch 3, wobei das Bestimmen, durch die erste Knoteneinrichtung (200) basierend auf dem zweiten abnormalen Verhalten und den dritten abnormalen Ereignisinformationen, dass die Bedingung zum Erzeugen der Bedrohungsausbruchinformationen nicht erfüllt ist, Folgendes umfasst:

Bestimmen, durch die erste Knoteneinrichtung (200), einer Angriffsphase des zweiten abnormalen Verhaltens und einer Angriffsart des zweiten abnormalen Verhaltens basierend auf dem zweiten abnormalen Verhalten und den dritten abnormalen Ereignisinformationen;

Bestimmen, durch die erste Knoteneinrichtung (200), eines zweiten Angriffsphasengewichtungswerts des zweiten abnormalen Verhaltens basierend auf der Angriffsphase des zweiten abnormalen Verhaltens, wobei der zweite Angriffsphasengewichtungswert eine Wichtigkeit der Angriffsphase des zweiten abnormalen Verhaltens zum Bestimmen angibt, ob die Bedingung zum Erzeugen der Bedrohungsausbruchinformationen erfüllt ist;

Bestimmen, durch die erste Knoteneinrichtung (200), eines zweiten Angriffsartgewichtungswerts des zweiten abnormalen Verhaltens basierend auf der Angriffsart des zweiten abnormalen Verhaltens, wobei der zweite Angriffsartgewichtungswert eine Wichtigkeit der Angriffsart des zweiten abnormalen Verhaltens zum Bestimmen angibt, ob die Bedingung zum Erzeugen der Bedrohungsausbruchinformationen erfüllt ist;

Erlangen, durch die erste Knoteneinrichtung (200), eines dritten Bedrohungsausbruchparameterwerts der ersten Knoteneinrichtung (200) basierend auf dem zweiten Angriffsphasengewichtungswert und dem zweiten Angriffsartgewichtungswert; und

wenn der dritte Bedrohungsausbruchparameterwert kleiner als oder gleich einem voreingestellten dritten Ausbruchschwellenwert ist, Bestimmen, durch die erste Knoteneinrichtung (200), dass die Bedingung zum Erzeugen der Bedrohungsausbruchinformationen nicht erfüllt ist.

9. Verfahren nach Anspruch 1, wobei das Bestimmen, durch die erste Knoteneinrichtung (200) basierend auf den Bedrohungsausbruchinformationen, einer Knoteneinrichtung, welche die Behandlungsmaßnahme ausführt, Folgendes umfasst:

Bestimmen, durch die erste Knoteneinrichtung (200), eines ersten Netzwerkvermögensgewichtungswerts der ersten Knoteneinrichtung basierend auf dem Netzwerkstandort der ersten Knoteneinrichtung (200) und dem Dienstattribut, das der ersten Knoteneinrichtung (200) entspricht, wobei der erste Netzwerkvermögensgewichtungswert eine Vermögenswichtigkeit der ersten Knoteneinrichtung (200) in einem Netzwerk angibt, zu dem die erste Knoteneinrichtung (200) gehört;

Erlangen, durch die erste Knoteneinrichtung (200), von Angriffsdauerinformationen des zweiten abnormalen Ereignisses; Bestimmen, durch die erste Knoteneinrichtung (200) basierend auf einer voreingestellten Knotenauswahltabelle, eines in Betracht kommenden Knoteneinrichtungssatzes, der einer Kombination des ersten Netzwerkvermögensgewichtungswerts und den Angriffsdauerinformationen des zweiten abnormalen Ereignisses entspricht, wobei die Knotenauswahltabelle eine Entsprechung zwischen einem Netzwerkvermögensgewichtungswert, Angriffsdauerinformationen und einer in Betracht kommenden Knoteneinrichtung umfasst; und

Auswählen, durch die erste Knoteneinrichtung (200) aus dem in Betracht kommenden Knoteneinrichtungssatz, einer in Betracht kommenden Knoteneinrichtung als die Knoteneinrichtung, welche die Behandlungsmaßnahme ausführt, wobei die ausgewählte in Betracht kommende Knoteneinrichtung eine in Betracht kommende Knoteneinrichtung ist, die sich in dem in Betracht kommenden Knoteneinrichtungssatz befindet und die eine kürzeste topologische Distanz von der ersten Knoteneinrichtung (200) aufweist.

10. System zur Verarbeitung von Netzwerkbedrohungen, umfassend eine erste Knoteneinrichtung (200) und eine zweite Knoteneinrichtung, wobei

die zweite Knoteneinrichtung zu Folgendem konfiguriert ist: Senden erster abnormaler Ereignisinformationen an die erste Knoteneinrichtung (200), wobei die ersten abnormalen Ereignisinformationen Attributbeschreibungsinformationen eines ersten abnormalen Ereignisses, eine Angriffsphase des ersten abnormalen Ereignisses und eine Angriffsart des ersten abnormalen Ereignisses umfassen; und

die erste Knoteneinrichtung (200) dazu konfiguriert ist, eines der Verfahren nach Anspruch 1-9 durchzuführen.

11. System zur Verarbeitung von Netzwerkbedrohungen nach Anspruch 10, wobei das System zur Verarbeitung von Netzwerkbedrohungen ferner eine dritte Knoteneinrichtung umfasst, wobei die dritte Knoteneinrichtung dazu konfiguriert ist, dritte abnormale Ereignisinformationen an die erste Knoteneinrichtung zu senden, wobei die dritten abnormalen Ereignisinformationen Attributbeschreibungsinformationen eines dritten abnormalen Ereignisses, eine Angriffsphase des dritten abnormalen Ereignisses und eine Angriffsart des dritten abnormalen Ereignisses umfassen; und

die erste Knoteneinrichtung (200) zu Folgendem konfiguriert ist: Detektieren eines zweiten abnormalen Verhaltens auf der ersten Knoteneinrichtung (200); Bestimmen, basierend auf dem zweiten abnormalen Verhalten und den dritten abnormalen Ereignisinformationen, dass die Bedingung zum Erzeugen der Bedrohungsausbruchinformationen nicht erfüllt ist, und Erzeugen vierter abnormaler Ereignisinformationen, wobei ein viertes abnormales Ereignis über Zuordnung basierend auf dem dritten abnormalen Ereignis und dem zweiten abnormalen Verhalten erzeugt wird; und Senden der vierten abnormalen Ereignisinformationen an ein Netzwerk, zu dem die erste Knoteneinrichtung (200) gehört.

12. System zur Verarbeitung von Netzwerkbedrohungen nach Anspruch 10 oder 11, wobei das System zur Verarbeitung von Netzwerkbedrohungen ferner eine vierte Knoteneinrichtung umfasst, wobei

die vierte Knoteneinrichtung (200) zu Folgendem konfiguriert ist: Bestimmen, basierend auf den Bedrohungsausbruchinformationen, dass die vierte Knoteneinrichtung die Behandlungsmaßnahme auszuführen hat, und Senden der Bedrohungsausbruchinformationen an die vierte Knoteneinrichtung; und

die vierte Knoteneinrichtung zu Folgendem konfiguriert ist: Empfangen der Bedrohungsausbruchinformationen von der ersten Knoteneinrichtung (200) und Ausführen der Behandlungsmaßnahme für das zweite abnormale Ereignis basierend auf den Behandlungsausbruchinformationen.

13. Kommunikationsvorrichtung, wobei die Kommunikationsvorrichtung eine erste Knoteneinrichtung (200) ist und die Kommunikationsvorrichtung dazu konfiguriert ist, eines der Verfahren nach Anspruch 1-9 durchzuführen.

**Revendications**

1. Procédé de traitement de menace de réseau, dans lequel le procédé comprend :

la détection (301), par un premier dispositif de nœud (200), d'un premier comportement anormal sur le premier dispositif de nœud (200) ;
la détermination (302), par le premier dispositif de nœud (200) sur la base du premier comportement anormal et des informations de premier événement anormal, qu'une condition pour générer des informations de rafale de menaces est remplie, et la génération des informations de rafale de menaces, dans lequel les informations de premier événement anormal sont envoyées par un deuxième dispositif de nœud au premier dispositif de nœud avant que le premier dispositif de nœud (200) détecte le premier comportement anormal, les informations de premier événement anormal comprennent des informations de description d'attributs d'un premier événement anormal, une phase d'attaque du premier événement anormal, dans lequel la phase d'attaque est une phase dans laquelle le premier événement anormal attaque un réseau, et un type d'attaque du premier événement anormal, dans lequel le type d'attaque est un type correspondant à un moyen d'attaque du premier événement anormal dans le réseau, les informations de rafale de menaces comprennent des informations de description d'attributs d'un deuxième événement anormal et des informations de degré de menace correspondant au deuxième événement anormal, et le deuxième événement anormal est généré par le premier dispositif de nœud par association sur la base du premier événement anormal et du premier comportement anormal, dans lequel les informations de rafale de menaces sont des informations sur un événement de menace qui se produit en rafale sur le premier dispositif de nœud (200), dans lequel le deuxième événement anormal est un enregistrement généré par le premier dispositif de nœud dans le réseau sur la base du premier comportement anormal détecté,
dans lequel la détermination, par le premier dispositif de nœud (200) sur la base du premier comportement anormal et des informations de premier événement anormal, qu'une condition pour générer des informations de rafale de menaces est remplie comprend :

la détermination, par le premier dispositif de nœud (200), d'une phase d'attaque du premier comportement anormal et d'un type d'attaque du premier comportement anormal sur la base du premier comportement anormal et des informations de premier événement anormal ;

la détermination, par le premier dispositif de nœud (200), d'une première valeur de poids de phase d'attaque du premier comportement anormal sur la base de la phase d'attaque du premier comportement anormal, dans lequel la première valeur de poids de phase d'attaque indique l'importance de la phase d'attaque du premier comportement anormal pour déterminer si la condition pour générer les informations de rafale de menaces est remplie ;

la détermination, par le premier dispositif de nœud (200), d'une première valeur de poids de type d'attaque du premier comportement anormal sur la base du type d'attaque du premier comportement anormal, dans lequel la première valeur de poids de type d'attaque indique l'importance du type d'attaque du premier comportement anormal pour déterminer si la condition pour générer les informations de rafale de menaces est remplie ;

l'obtention, par le premier dispositif de nœud (200), d'une première valeur de paramètre de rafale de menaces du premier dispositif de nœud (200) sur la base de la première valeur de poids de phase d'attaque et de la première valeur de poids de type d'attaque ; et

lorsque la première valeur de paramètre de rafale de menaces est supérieure à un seuil de première rafale prédéfini, la détermination, par le premier dispositif de nœud (200), que la condition pour générer les informations de rafale de menaces est remplie ; et

la détermination (303), par le premier dispositif de nœud (200), d'une mesure de traitement pour le deuxième événement anormal sur la base des informations de rafale de menaces,

dans lequel la détermination, par le premier dispositif de nœud (200), d'une mesure de traitement pour le deuxième événement anormal sur la base des informations de rafale de menaces comprend :

la détermination, par le premier dispositif de nœud (200) sur la base des informations de rafale de menaces, d'un dispositif de nœud qui exécute la mesure de traitement, et le déclenchement du dispositif de nœud qui exécute la mesure de traitement pour exécuter la mesure de traitement.

2. Procédé selon la revendication 1, dans lequel la détermination, par le premier dispositif de nœud (200) sur la base du premier comportement anormal et des informations de premier événement anormal, qu'une condition pour générer des informations de rafale de menaces est remplie comprend :

l'obtention, par le premier dispositif de nœud (200), d'une localisation réseau du premier dispositif de nœud (200) et d'un attribut de service correspondant au premier dispositif de nœud (200) ; et

la détermination, par le premier dispositif de nœud (200) sur la base du premier comportement anormal, des informations de premier événement anormal, de la localisation réseau du premier dispositif de nœud (200) et de l'attribut de service correspondant au premier dispositif de nœud (200), que la condition pour générer les informations de rafale de menaces est remplie.

3. Procédé selon la revendication 1 ou 2, dans lequel le procédé comprend :

la détection, par le premier dispositif de nœud (200), d'un second comportement anormal sur le premier dispositif de nœud (200) ;

la détermination, par le premier dispositif de nœud (200) sur la base du second comportement anormal et des informations de troisième événement anormal, que la condition pour générer les informations de rafale de menaces n'est pas remplie, et la génération d'informations de quatrième événement anormal, dans lequel les informations de troisième événement anormal sont envoyées par un troisième dispositif de nœud avant que le premier dispositif de nœud (200) détecte le second comportement anormal, les informations de troisième événement anormal comprennent des informations de description d'attributs d'un troisième événement anormal, une phase d'attaque du troisième événement anormal et un type d'attaque du troisième événement anormal, et un quatrième événement anormal est généré par association sur la base du troisième événement anormal et du second comportement anormal ; et

l'envoi, par le premier dispositif de nœud (200), des informations de quatrième événement anormal à un réseau auquel appartient le premier dispositif de nœud (200).

4. Procédé selon la revendication 3, dans lequel la détermination, par le premier dispositif de nœud (200) sur la base du second comportement anormal et des informations de troisième événement anormal, que la condition pour générer les informations de rafale de menaces n'est pas remplie comprend :

l'obtention, par le premier dispositif de nœud (200), de la localisation réseau du premier dispositif de nœud (200) et de l'attribut de service correspondant au premier dispositif de nœud (200) ; et
la détermination, par le premier dispositif de nœud (200) sur la base du second comportement anormal, des informations de troisième événement anormal, de la localisation réseau du premier dispositif de nœud (200) et de l'attribut de service correspondant au premier dispositif de nœud (200), que la condition pour générer les informations de rafale de menaces n'est pas remplie.

5. Procédé selon l'une quelconque des revendications 1 à 4, dans lequel les informations de premier événement anormal sont envoyées par le deuxième dispositif de nœud selon un protocole de diffusion.

6. Procédé selon la revendication 2, dans lequel la détermination, par le premier dispositif de nœud (200) sur la base du premier comportement anormal, des informations de premier événement anormal, de la localisation réseau du premier dispositif de nœud (200) et de l'attribut de service correspondant au premier dispositif de nœud (200), que la condition pour générer les informations de rafale de menaces est remplie comprend :

la détermination, par le premier dispositif de nœud (200), d'une phase d'attaque du premier comportement anormal et d'un type d'attaque du premier comportement anormal sur la base du premier comportement anormal et des informations de premier événement anormal ;
la détermination, par le premier dispositif de nœud (200), d'une première valeur de poids de phase d'attaque du premier comportement anormal sur la base de la phase d'attaque du premier comportement anormal, dans lequel la première valeur de poids de phase d'attaque indique l'importance de la phase d'attaque du premier comportement anormal pour déterminer si la condition pour générer les informations de rafale de menaces est remplie ;
la détermination, par le premier dispositif de nœud (200), d'une première valeur de poids de type d'attaque du premier comportement anormal sur la base du type d'attaque du premier comportement anormal, dans lequel la première valeur de poids de type d'attaque indique l'importance du type d'attaque du premier comportement anormal pour déterminer si la condition pour générer les informations de rafale de menaces est remplie ;
la détermination, par le premier dispositif de nœud (200), d'une première valeur de poids d'actif réseau du premier dispositif de nœud (200) sur la base de la localisation réseau du premier dispositif de nœud (200) et de l'attribut de service correspondant au premier dispositif de nœud (200), dans lequel la première valeur de poids d'actif réseau indique l'importance de l'actif du premier dispositif de nœud (200) dans un réseau auquel appartient le premier dispositif de nœud (200) ;
l'obtention, par le premier dispositif de nœud (200), d'une deuxième valeur de paramètre de rafale de menaces du premier dispositif de nœud (200) sur la base de la première valeur de poids de phase d'attaque, de la première valeur de poids de type d'attaque et de la première valeur de poids d'actif réseau ; et
lorsque la deuxième valeur de paramètre de rafale de menaces est supérieure à un seuil de deuxième rafale prédéfini, la détermination, par le premier dispositif de nœud (200), que la condition pour générer les informations de rafale de menaces est remplie.

7. Procédé selon la revendication 6, dans lequel l'obtention, par le premier dispositif de nœud (200), d'une deuxième valeur de paramètre de rafale de menaces du premier dispositif de nœud (200) sur la base de la première valeur de poids de phase d'attaque, de la première valeur de poids de type d'attaque et de la première valeur de poids d'actif réseau comprend :

la détermination, par le premier dispositif de nœud (200), d'informations de durée d'attaque du premier comportement anormal et d'informations de profondeur de chemin d'attaque du premier comportement anormal, sur la base du premier comportement anormal et des informations de description d'attributs du premier événement anormal ; et
l'obtention, par le premier dispositif de nœud (200), de la deuxième valeur de paramètre de rafale de menaces sur la base de la première valeur de poids de phase d'attaque, de la première valeur de poids de type d'attaque, de la première valeur de poids d'actif réseau, des informations de durée d'attaque du premier comportement anormal et des informations de profondeur de chemin d'attaque du premier comportement anormal.

8. Procédé selon la revendication 3, dans lequel la détermination, par le premier dispositif de nœud (200) sur la base du second comportement anormal et des informations de troisième événement anormal, que la condition pour générer les informations de rafale de menaces n'est pas remplie comprend :

la détermination, par le premier dispositif de nœud (200), d'une phase d'attaque du second comportement anormal et d'un type d'attaque du second comportement anormal sur la base du second comportement anormal et des informations de troisième événement anormal ;
la détermination, par le premier dispositif de nœud (200), d'une seconde valeur de poids de phase d'attaque du second comportement anormal sur la base de la phase d'attaque du second comportement anormal, dans lequel la seconde valeur de poids de phase d'attaque indique l'importance de la phase d'attaque du second comportement anormal pour déterminer si la condition pour générer les informations de rafale de menaces est remplie ;
la détermination, par le premier dispositif de nœud (200), d'une seconde valeur de poids de type d'attaque du second comportement anormal sur la base du type d'attaque du second comportement anormal, dans lequel la seconde valeur de poids de type d'attaque indique l'importance du type d'attaque du second comportement anormal pour déterminer si la condition pour générer les informations de rafale de menaces est remplie ;
l'obtention, par le premier dispositif de nœud (200), d'une troisième valeur de paramètre de rafale de menaces du premier dispositif de nœud (200) sur la base de la seconde valeur de poids de phase d'attaque et de la seconde valeur de poids de type d'attaque ; et
lorsque la troisième valeur de paramètre de rafale de menaces est inférieure ou égale à un seuil de troisième rafale prédéfini, la détermination, par le premier dispositif de nœud (200), que la condition pour générer les informations de rafale de menaces n'est pas remplie.

9. Procédé selon la revendication 1, dans lequel la détermination, par le premier dispositif de nœud (200) sur la base des informations de rafale de menaces, d'un dispositif de nœud qui exécute la mesure de traitement comprend :

la détermination, par le premier dispositif de nœud (200), d'une première valeur de poids d'actif réseau du premier dispositif de nœud sur la base de la localisation réseau du premier dispositif de nœud (200) et de l'attribut de service correspondant au premier dispositif de nœud (200), dans lequel la première valeur de poids d'actif réseau indique l'importance de l'actif du premier dispositif de nœud (200) dans un réseau auquel appartient le premier dispositif de nœud (200) ;
l'obtention, par le premier dispositif de nœud (200), d'informations de durée d'attaque du deuxième événement anormal ;
la détermination, par le premier dispositif de nœud (200) sur la base d'une table de sélection de nœuds prédéfinie, d'un ensemble de dispositifs de nœud candidats correspondant à une combinaison de la première valeur de poids d'actif réseau et des informations de durée d'attaque du deuxième événement anormal, dans lequel la table de sélection de nœuds comprend une correspondance entre une valeur de poids d'actif réseau, des informations de durée d'attaque et un dispositif de nœud candidat ; et
la sélection, par le premier dispositif de nœud (200) à partir de l'ensemble de dispositifs de nœud candidats, d'un dispositif de nœud candidat comme dispositif de nœud qui exécute la mesure de traitement, dans lequel le dispositif de nœud candidat sélectionné est un dispositif de nœud candidat qui se trouve dans l'ensemble de dispositifs de nœud candidats et qui a une distance topologique la plus courte du premier dispositif de nœud (200).

10. Système de traitement de menace de réseau, comprenant un premier dispositif de nœud (200) et un deuxième dispositif de nœud, dans lequel

le deuxième dispositif de nœud est configuré pour : envoyer des informations de premier événement anormal au premier dispositif de nœud (200), dans lequel les informations de premier événement anormal comprennent des informations de description d'attributs d'un premier événement anormal, une phase d'attaque du premier événement anormal et un type d'attaque du premier événement anormal ; et
le premier dispositif de nœud (200) est configuré pour réaliser l'un quelconque des procédés selon les revendications 1 à 9.

11. Système de traitement de menace de réseau selon la revendication 10, dans lequel le système de traitement de menace de réseau comprend également un troisième dispositif de nœud, dans lequel

le troisième dispositif de nœud est configuré pour envoyer des informations de troisième événement anormal au premier dispositif de nœud, dans lequel les informations de troisième événement anormal comprennent des informations de description d'attributs d'un troisième événement anormal, une phase d'attaque du troisième événement anormal et un type d'attaque du troisième événement anormal ; et le premier dispositif de nœud (200) est configuré pour : détecter un second comportement anormal sur le premier dispositif de nœud (200) ; déterminer, sur la base du second comportement anormal et des informations de troisième événement anormal, que la condition pour générer les informations de rafale de menaces n'est pas remplie, et générer des informations de quatrième événement anormal, dans lequel un quatrième événement anormal est généré par association sur la base du troisième événement anormal et du second comportement anormal ; et envoyer les informations de quatrième événement anormal à un réseau auquel appartient le premier dispositif de nœud (200).

12. Système de traitement de menace de réseau selon la revendication 10 ou 11, dans lequel le système de traitement de menace de réseau comprend également un quatrième dispositif de nœud, dans lequel

le premier dispositif de nœud (200) est configuré pour : déterminer, sur la base des informations de rafale de menaces, que le quatrième dispositif de nœud doit exécuter la mesure de traitement, et envoyer les informations de rafale de menaces au quatrième dispositif de nœud ; et le quatrième dispositif de nœud est configuré pour : recevoir les informations de rafale de menaces à partir du premier dispositif de nœud (200) et exécuter la mesure de traitement du deuxième événement anormal sur la base des informations de rafale de menace.

13. Appareil de communication, dans lequel l'appareil de communication est un premier dispositif de nœud (200) et l'appareil de communication est configuré pour réaliser l'un quelconque des procédés selon les revendications 1 à 9.

Network

Second node
device

First node
device

FIG. 1a

Network

Third node
device

First node
device

FIG. 1b

Network

Second node
device

First node
device

Fourth
node device

FIG. 1c

200

First node device

201

205

Processor

CPU 0

CPU 1

Processor

CPU 0

CPU 1

203

Memory

210

Communicat
ion bus

202

Program
code

204

Network interface

Second node device, third node device
or fourth node device

FIG. 2

| A first node device detects a first abnormal behavior for the first node device | 301 |

↓

| The first node device determines, based on the first abnormal behavior and first abnormal event information, that a condition for generating threat burst information is met, and generates the threat burst information | 302 |

↓

| The first node device determines a handling measure for a second abnormal event based on the threat burst information | 303 |

FIG. 3

| A first node device detects a first abnormal behavior for the first node device | 301 |

↓

| The first node device determines, based on the first abnormal behavior and first abnormal event information, that a condition for generating threat burst information is met, and generates the threat burst information | 302 |

↓

| The first node device obtains a network location of the first node device and a service attribute corresponding to the first node device | A1 |

↓

| The first node device determines, based on the first abnormal behavior, the first abnormal event information, the network location of the first node device, and the service attribute corresponding to the first node device, that the condition for generating the threat information is met | A2 |

FIG. 4

A first node device detects a second abnormal behavior for the first node device ⌐ 501

The first node device determines, based on the second abnormal behavior and third abnormal event information, that a condition for generating threat burst information is not met, and generates fourth abnormal event information ⌐ 502

The first node device sends the fourth abnormal event information to a network to which the first node device belongs ⌐ 503

FIG. 5

| First node device | | Second node device |

601: Send first abnormal event information to the first node device

602: Detect a first abnormal behavior for the first node device

603: Determine, based on the first abnormal behavior and first abnormal event information, that a condition for generating threat burst information is met, and generate the threat burst information

604: Determine a handling measure for a second abnormal event based on the threat burst information

FIG. 6

```
┌─────────────────────┐                              ┌─────────────────────┐
│   First node device │                              │  Third node device  │
└─────────────────────┘                              └─────────────────────┘
           │                                                     │
           │         701: Send third abnormal event             │
           │◄────── information to the first node device ────────│
           │                                                     │
┌──────────────────────────────────┐                            │
│ 702: Detect a second abnormal     │                           │
│       behavior for                │                           │
│       the first node device       │                           │
└──────────────────────────────────┘                            │
           │                                                     │
┌──────────────────────────────────┐                            │
│ 703: Determine, based on the      │                           │
│   second abnormal behavior and    │                           │
│   the third abnormal event        │                           │
│   information, that a condition    │                           │
│   for generating threat burst      │                           │
│   information is not met, and      │                           │
│   generate fourth abnormal event   │                           │
│   information                      │                           │
└──────────────────────────────────┘                            │
           │                                                     │
┌──────────────────────────────────┐                            │
│ 704: Send the fourth abnormal     │                           │
│   event information to a network   │                           │
│   to which the first node device   │                           │
│   belongs                          │                           │
└──────────────────────────────────┘
```

FIG. 7

```
┌─────────────┐              ┌─────────────┐              ┌─────────────┐
│ Fourth node │              │             │              │ Second node │
│   device    │              │First node device│          │   device    │
└─────────────┘              └─────────────┘              └─────────────┘
```

601: Send first
abnormal event
information to the first
node device

602: Detect a first abnormal behavior for
the first node device

603: Determine, based on the first abnormal
behavior and first abnormal event
information, that a condition for generating
threat burst information is met, and generate
the threat burst information

604a: Determine,
based on the threat
burst information, that
the fourth node device
is to execute a
handling measure, and
send the threat burst
information to the
fourth node device

605: Receive the threat burst
information from the first node device,
and execute the handling measure for a
second abnormal event based on the
threat burst information

FIG. 8

Second
node device

First node
device

Attack path

M domain or B
domain

Domain
border

Threat burst
information

O domain

Fourth node
device

FIG. 9

O domain    B/M domain

OSS management
plane

C

Host

OSS operation and
maintenance plane

A

D    E

B

Host

Network element

F

Domain border

FIG. 10a

Node device that generates an abnormal event

To-be-propagated node device

FIG. 10b

To-be-propagated node device

To-be-propagated node device

Node device that generates an abnormal event

FIG. 10c

Node device
that generates
an abnormal
event

To-be-
propagated
node device

Node device
that receives an
abnormal event

FIG. 10d

Node device
that receives an
abnormal event

FIG. 10e

1100

First node device

1101                          1102

Detection module  ——  Processing module

                                    1103

                     Determining module

FIG. 11

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109005173 A
- CN 101431416 B